(19) Europäisches Patentamt
European Patent Office
Office européen des brevets

(11) **EP 2 619 150 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **11763625.8**

(22) Anmeldetag: **21.09.2011**

(51) Int Cl.:
*C03B 5/235* (2006.01)   *F23N 3/00* (2006.01)
*F23N 5/00* (2006.01)

(86) Internationale Anmeldenummer:
**PCT/EP2011/066457**

(87) Internationale Veröffentlichungsnummer:
**WO 2012/038482 (29.03.2012 Gazette 2012/13)**

(54) **VERFAHREN ZUM GEREGELTEN BETRIEB EINES REGENERATIV BEHEIZTEN INDUSTRIEOFENS, STEUEREINRICHTUNG UND INDUSTRIEOFEN**

METHOD FOR THE CONTROLLED OPERATION OF AN INDUSTRIAL OVEN WHICH IS HEATED IN A REGENERATIVE MANNER, CONTROL DEVICE, AND INDUSTRIAL OVEN

PROCÉDÉ POUR FAIRE FONCTIONNER, DE MANIÈRE RÉGULÉE, UN FOUR INDUSTRIEL À CHAUFFAGE À RÉGÉNÉRATION, DISPOSITIF DE COMMANDE ET FOUR INDUSTRIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2010 DE 102010041157**

(43) Veröffentlichungstag der Anmeldung:
**31.07.2013 Patentblatt 2013/31**

(73) Patentinhaber: **Software & Technologie Glas GmbH (STG)**
**03051 Cottbus-Kiekebusch (DE)**

(72) Erfinder:
• **HEMMANN, Peter**
**03050 Cottbus (DE)**
• **BIRLE, Andreas**
**03044 Cottbus (DE)**
• **SCHULZ, Thomas**
**03159 Döbern (DE)**
• **HEELEMANN, Helmut**
**03050 Cottbus (DE)**

(74) Vertreter: **Eisenführ Speiser Patentanwälte Rechtsanwälte PartGmbB Anna-Louisa-Karsch-Strasse 2 10178 Berlin (DE)**

(56) Entgegenhaltungen:
EP-A2- 0 657 390   DD-A1- 223 230
DE-A1- 3 610 365   US-A- 3 015 357

• **HEMMANN P: "ADVANCED COMBUSTION CONTROL - THE BASIS FOR NOX REDUCTION AND ENERGY SAVING IN GLASS TANK FURNACES", GLASS SCIENCE AND TECHNOLOGY, DEUTSCHE GLASTECHNISCHE GESELLSCHAFT, OFFENBACH, DE, Bd. 77, Nr. 6, 1. November 2004 (2004-11-01), Seiten 306-311, XP001212591, ISSN: 0946-7475**

EP 2 619 150 B1

## Beschreibung

Die Erfindung betrifft ein Verfahren zum geregelten Betrieb eines regenerativ beheizten Industrieofens, insbesondere mit einer Schmelzwanne, insbesondere für Glas, nach dem Oberbegriff des Anspruchs 1 sowie eine zur Ausführung des Verfahrens ausgebildete Regeleinrichtung gemäß dem Oberbegriff des Anspruchs 17. Die Erfindung betrifft auch einen Industrieofen nach dem Oberbegriff des Anspruchs 19.

## Stand der Technik

Grundsätzlich ist ein Industrieofen nicht auf die Verwendung in der Glasherstellung beschränkt. Z. B. kann ein Industrieofen der eingangs genannten Art auch in der Metallherstellung od. dgl. eingesetzt werden. Ein regenerativer Industrieofen der eingangs genannten Art hat sich jedoch als besonders geeignet in der Glasherstellung zum Schmelzen von Glas erwiesen.

Bislang wird die Steuerung regenerativer Glasschmelzöfen -d. h. regelmäßig mittels Steuerung über den Oberofen im Ofenraum als Regelstrecke- ausschließlich PID-Reglern anvertraut, welche die Regelung einer Oberofentemperatur zum Ziel haben und deren Ausgang entweder eine Brennstoffmenge selbst darstellt oder eine Verbrennungsluftmenge, der die Brennstoffmenge dann in einstellbarem Verhältnis folgt.

Problematisch dabei ist, dass sich in der Tat solche Temperaturregler regelmäßig als ungeeignet erweisen, die Temperatur eines regenerativen Glasschmelzofens erfolgreich und stabil zu regeln und insofern ungenutzt bleiben. Ein erster Grund liegt im bislang verfolgten Regelungsentwurf, dem die systematische Tendenz innewohnt, geringfügige Temperaturunterschiede zwischen den Regeneratoren immer weiter zu vergrößern. Dabei wird auch der Brennstoffeinsatz zwischen den Feuerseiten immer weiter vergrößert, ohne dass jemals ein Sollwert der Ofentemperatur erreichbar wäre; d.h. die Regelung konvergiert nicht auf den Sollwert einer Ofentemperatur.

Aus DE 36 10 365 A1 ist ein Verfahren zur technologisch geführten Regelung einer Oberofenheizung eines Industrieofens bekannt, bei dem ein Brennstoffstrom zur Regelung einer Gewölbetemperatur des Oberofens vorgesehen ist und das Problem einer regenerativen Seitenunsymmetrie subjektiven Einflüssen überlassen ist. Es wurde gefunden, dass Temperaturunterschiede in den Ofentemperaturen zwischen linksseitiger und rechtsseitiger Beheizung in überwiegendem Masse in entsprechenden Temperaturunterschieden der zugehörigen Regeneratoren ihre Ursache haben. In Einzelfällen können Kopftemperaturen des linken Regenerators um 45 °C niedriger als die des rechten Regenerators sein und gleichzeitig die Temperaturen im Ofenraum, d. h. regelmäßig im Oberofen, bei linksseitiger Beheizung um 20 °C niedriger als dieselben Temperaturen bei rechtsseitiger Beheizung sein.

Wünschenswert ist ein technologisches Steuerungskonzept, das im wesentlichen auf einen Sollwert der Ofentemperatur konvergiert und insbesondere das Problem der Seitenunsymmetrie regelungstechnisch behebt.

Ein zweiter Grund liegt darin, dass herkömmliche Regelverfahren unkontrollierten Luftzutritt unrichtig als konstant voraussetzen oder die Verbrennungsluftzufuhr ausschließlich aufgrund eines manuell oder kontinuierlich gemessenen Messwertes von Restsauerstoff korrigieren, der jedoch aufgrund seines nichtlinearen Zusammenhangs zur Verbrennungsluft keine optimale Regeldynamik erreichen kann. Insbesondere kann dieser Ansatz den Bereich unterstöchiometrischer Beheizung nicht bewerten, weil aus einem Vergleich verschiedener Prozesszustände mit jeweils 0 % Restsauerstoff keine sinnvolle regelungstechnische Aktion mehr zu begründen ist.

Ein dritter Grund liegt darin, dass herkömmliche Regelverfahren nicht die besonderen Anforderungen der regenerativen Beheizung berücksichtigen, bei der die Verbrennungsluft neben ihrer Funktion als Sauerstoffträger für die Verbrennung ebenso als Transportmedium für die Wärme aus dem Regenerator in den Ofenraum dient. Darum macht es für die regelungstechnische Kompensation unkontrollierten Falschluftzutritts einen Unterschied, ob die zu kompensierende unkontrollierte Falschluft vor dem Regenerator eingetreten ist -also am Wärmetransport teilnimmt- oder ob sie erst nach dem Regenerator hinzukommt -und damit nur den abgasseitigen Regenerator einseitig mit zusätzlicher Abgaswärme aufheizt- also die thermische Symmetrie der Regeneratoren stört.

Weitverbreitet und praxisüblich ist die sogenannte Verhältnisregelung zwischen Brennstoffstrom und Verbrennungsluftmengenstrom. Dabei folgt entweder die Verbrennungsluftmenge dem Brennstoff in einem einstellbaren Verhältnis oder umgekehrt folgt der Brennstoffstrom der Verbrennungsluftmenge in einem einstellbaren Verhältnis. Hierbei werden die Verhältnisvorgaben empirisch so eingestellt, dass im Abgasstrom ein als optimal eingeschätzter Restsauerstoffwert eingestellt wird.

Problematisch dabei ist mindestens, dass unkontrollierte Zugänge zum oder Abgänge vom Verbrennungsluftstrom entweder als nicht vorhanden oder als konstant vorausgesetzt werden. Diese Voraussetzung ist jedoch tatsächlich -wie oben erläutert- nicht gegeben.

Vielmehr dringt in regenerativ beheizten Glasschmelzöfen typischerweise bis zu 10 % aller zur Verbrennung gelangenden Luft als Falschluft unkontrolliert in Regeneratoren oder Ofenraum ein, wobei die unkontrollierte Falschluftzufuhr keineswegs konstant ist, sondern durch Ofendruck, Temperaturen, und andere Betriebsparameter beeinflusst wird. Ebenso werden unkontrollierte "Falsch"-Luftverluste beobachtet, z. B. durch den Kurzschlussstrom von Verbrennungsluft direkt in den Abgasstrom im Falle undichter Umsteuerschieber.

Solche Mängel können nicht durch sogenannte Cross-Limit-Verhältnisregelungen ausgeglichen werden, bei der die Verbrennungsluft in einem einstellbaren Verhältnis dem Maximum aus Sollwert und Prozesswert des Brennstoffes folgt, und umgekehrt der Brennstoff begrenzt wird, wenn weniger Luft vorhanden ist als dem eingestellten Luftverhältnis entspräche. Denn auch dieses Verfahren setzt stillschweigend und unzutreffend voraus, dass unkontrollierte Falschluft entweder nicht vorhanden oder konstant zugeführt wird.

Einen bekannten Ansatz zur Lösung des Problems liefert ein als "Sauerstoff-Trimming" bezeichnetes Verfahren, bei dem die empirische Korrektur des Luftverhältnisses ersetzt wird durch eine automatische Korrektur, die sich an der Differenz zwischen einem Zielwert und einem kontinuierlich gemessenen Wert für den Restsauerstoffgehalt im Abgas orientiert. Dieses Verfahren kann jedoch nur im Falle oxydierender Feuerung eingesetzt werden, d. h. solange noch ausreichend Restsauerstoff vorhanden ist. Der Methode des "Sauerstoff-Trimming" haftet der Nachteil an, dass zwischen dem Restsauerstoffwert im Abgas und dem dazugehörigen Wert des Verbrennungsluftstroms ein nicht-lineares Verhältnis besteht, das die Dynamik einer solchen Regelung deutlich beeinträchtigt.

Aus der Steuerung von Verbrennungsmotoren, insbesondere in der Kraftfahrzeugtechnik, ist das als "Lambdaregelung" bekannte Verfahren bekannt, bei dem das Gemisch aus Kraftstoff und Luft automatisch so korrigiert wird, dass die Sollvorgabe für das Messergebnis einer Lambdasonde im Abgas stromabwärts des Motors eingehalten wird.

Erstmals ist dem Artikel von Hemmann et al. "Advanced combustion control - the basis for a NOx reduction and energy saving in glass tank furnaces" in Glass Science Technology 77 (2004) No. 6 (XP-001212591) vorgeschlagen, eine reine Lambda-Regelung zu nutzen, d. h. eine Regelung des Quotienten von Verbrennungsluft zum stöchiometrischen Minimum von Verbrennungsluft, um die Infiltration von Falschluft zu minimieren bzw. unvermeidbare Falschluft zu kompensieren. Die Installation von Zirkondioxid-Lambda-Sensoren in den Regeneratorköpfen wird vorgeschlagen sowie eine Kombination einer PID-Regelung mit einer prädikativen Steuerung. Erstmals wird Falschluft als typischer unkontrollierter Eintrag von kalter Luft in den Ofen und den Regenerator benannt derart, dass diese an der Verbrennung teilnimmt und nicht durch eine Verhältnissteuerung erfasst ist. Die Konsequenz ist, dass so eine reine Lambda-Regelung zur Behebung dieses Missstands geeignet ist.

Wünschenswert ist ein verbessertes Regelungskonzept für einen Industrieofen der eingangs genannten Art unter Berücksichtigung der für die regenerative Beheizung von Industrieöfen typischen langen Reaktionszeiten zwischen einer Veränderung des Luftverhältnisses und der im Ergebnis messbaren Messwertänderung einer Abgasanalysemessung. Dies ist letztlich vor allem aufgrund des deutlich höheren Volumens von Regenerator und Ofenraum verursacht im Vergleich mit einem Verbrennungsmotor. Darum stößt eine unzureichende simple Übertragung eines Verfahrens aus der Kraftfahrzeugtechnik auf einen Industrieofen auf erhebliche Probleme in der Regeldynamik. Insbesondere berücksichtigen auch weder die Methode des "Sauerstoff-Trimming" noch die aus der Kraftfahrzeugtechnik bekannte "Lambdaregelung" die Periodizität der regenerativen Beheizung oder Befeuerung bei einem regenerativen Industrieofen der eingangs genannten Art. Stattdessen können typische wiederkehrende Trendmuster des unkontrollierten Falschluftzutritts oder des unkontrollierten Falschluftverlustes bei einem regenerativ befeuerten Industrieofen beobachtet werden, die mit einer allmählichen und langsamen Korrektur des Luftverhältnisses nicht oder nur unvollkommen ausgeglichen werden können während eine schnelle Korrektur des Luftverhältnisses an einer ungünstigen Regeldynamik des Industrieofens scheitert.

## Aufgabe

An dieser Stelle setzt die Erfindung an, deren Aufgabe es ist, ein verbessertes Verfahren zum geregelten Betrieb eines regenerativ beheizten Industrieofens, eine verbesserte Regeleinrichtung zur Durchführung des Verfahrens und einen verbesserten Industrieofen anzugeben. Insbesondere sollen die oben aufgeführten nachteiligen Aspekte des Standes der Technik möglichst vermeiden.

## Erfindung

Betreffend das Verfahren wird die Aufgabe durch die Erfindung mit einem Verfahren der eingangs genannten Art gelöst, bei dem erfindungsgemäß die Merkmale des kennzeichnenden Teils des Anspruchs 1 vorgesehen sind. Die Erfindung führt zur Lösung der Aufgabe auf eine Regeleinrichtung nach Anspruch 17 und einen Industrieofen nach Anspruch 19.

Unter Brennstoff ist insbesondere Brenngas zu verstehen. Andere Brennstoffe wie Öl oder dergleichen sind ebenfalls zum Betrieb eines Industrieofens möglich. Unter einem Injektor ist insbesondere eine Eindüseeinrichtung zu verstehen, die ausgebildet ist, Brennstoff unmittelbar vor einem Ofenraum in einer Zuführstrecke oder im Ofenraum einzudüsen, insbesondere getrennt von Verbrennungsluft. Eine Vermischung von Verbrennungsluft und Brennstoff ist erst im Ofenraum vorgesehen. Der Ofenraum weist insbesondere einen Oberofen und einen Unterofen auf. Ein Unterofen weist insbesondere eine Glasschmelzwanne oder dergleichen auf.

Die Bezeichnungen der Regeneratoren als linker und rechter Regenerator sind nicht einschränkend hinsichtlich der Ortsanordnung derselben zu verstehen und folgen dem allgemeinen technischen Sprachgebrauch. Die Bezeichnungen können auch anders gewählt werden, z. B. als erster und zweiter Regenerator. Die Regeneratoren können in Bezug auf eine Glasschmelzwanne in Flussrichtung oder quer zur Flussrichtung des Glases angeordnet sein. Ein einziger Regenerator kann einer Anzahl von Injektoren zugeordnet sein. Unter einem Regenerator kann auch ein Regeneratorabschnitt oder dergleichen zu verstehen sein, der einem einzelnen Injektor zugeordnet ist.

Das Konzept der Erfindung baut auf verfügbare Oberofentemperaturegelverfahren auf. Die Erfindung geht von der Überlegung aus, dass für einen Industrieofen die Verbrennungsluft neben ihrer Funktion zur Zuführung von Sauerstoff zur Verbrennung auch die Funktion hat, Wärme aus dem Regenerator aufzunehmen und in den Ofenraum zu transportieren. Unkontrollierter Falschluftzutritt in einem regenerativ beheizten Industrieofen hinterlässt demnach neben dem Einfluss auf den Restsauerstoffwert im Abgas auch immer eine thermische Spur in den Regeneratoren. Insbesondere wurde in einer Weiterbildung der Erfindung erkannt, dass dies an der thermischen Symmetrie oder Unsymmetrie der Regeneratoren erkennbar ist. Insbesondere wird aus der Interpretation dieser thermischen Spur gemäß dem Konzept der Erfindung erkennbar, ob der unkontrollierte Falschluftzutritt vor oder nach dem luftseitigen Regenerator erfolgt ist. Eine Falschluftindikation ist vorgesehen, um eine Fallunterscheidung zu erlauben, die je nach Herkunft der Falschluft unterschiedliche regelungstechnische Antworten und Begrenzungen verlangt, um der Wärmetransportfunktion der Verbrennungsluft Rechnung zu tragen.

Es ist ein wesentlicher Mangel aller bekannten Regelverfahren, dass sie die thermische Spur der unkontrollierten Luft und ihren Eintrittspunkt vor oder nach dem Regenerator nicht berücksichtigen. Missweisungen der Verbrennungsluftmengenmessung ebenso wie Luftverluste am Bestand der gemessenen und geregelten Verbrennungsluft treten aber als positive oder negative Beiträge zum Erscheinungsbild der unkontrollierten Falschluft auf. Sie sind gemäß dem weiterbildenden Konzept der Erfindung aus dem wärmetechnischen Verhalten und aus dem Messwerteverlauf der kontinuierlichen Abgasanalyse konkret zu ermitteln und bei der Wahl der regelungstechnischen Reaktion und notwendigen Begrenzungen zu berücksichtigen. Keiner der bisher bekannten Ansätze im Stand der Technik berücksichtigt die vorliegend erkannten Anforderungen, die sich aus den Eigenschaften der regenerativen Beheizung ergeben.

Die Erfindung hat erkannt, dass ein Verfahren zur Regelung der Verbrennungsluftzufuhr zu regenerativ beheizten Industrieöfen auf der insbesondere kontinuierlichen Analyse und Kompensation unkontrollierter Falschluftverluste oder unkontrollierten Falschluftzutritts zur Verbrennung beruhen sollte. Dies trifft insbesondere bei Glasschmelzwannen zu mit dem Ziel einer geregelt nahstöchiometrischen oder sogar geregelt unterstöchiometrischen Beheizung mit konstantem vorgebbarem Sollwert der Luftüberschusszahl Lambda. Gemäß dem Konzept der Erfindung zeigt eine Falschluftindikation an, ob unkontrollierte Falschluft durch Anpassung der Verbrennungsluft ausgeglichen werden sollte bzw. darf oder ob diese nur durch erhöhten Ofendruck unterdrückt werden sollte bzw. kann.

Im Rahmen einer besonders bevorzugten Weiterbildung hat es sich als vorteilhaft erwiesen zur Falschluftindikation einen Ausgang einer aktiven Symmetrieregelung zum Ausgleich thermischer Unsymmetrie der Regeneratoren zu nutzen, d. h. einen Ausgang als Kriterium zu nutzen, ob unkontrollierte Luft durch Anpassung der Verbrennungsluft ausgeglichen werden darf oder nur durch erhöhten Ofendruck unterdrückt werden kann. Vorzugsweise ist das erste Stellglied als ein Drosselmittel in der Verbrennungsluftzuführung gebildet, das zur Regelung einer Flussmenge der Verbrennungsluft ausgebildet ist. Vorzugsweise ist das zweite Stellglied als ein Schieber, z. B. Umsteuerschieber, in der Abgasabführung gebildet, das zum Aufbau eines Gegendrucks zum Ofendruck ausgebildet ist.

In einer besonders bevorzugten Weiterbildung des Verfahrens zur automatischen Regelung der Verbrennungsluftzufuhr zu einem regenerativen Industrieofen, insbesondere einer regenerativ befeuerten Glasschmelzwanne, ist vorgesehen, dass der Verbrennungsluftstrom durch einen an sich bekannten PID Regler automatisch geregelt wird, dessen Sollwert gebildet wird aus dem Produkt der Brennstoffmenge, dem stöchiometrischen Luftbedarf dieses Brennstoffs und einer als Zielgröße vorgegebenen Luftüberschusszahl Lambda, abzüglich der vorzugsweise laufend ermittelten Menge an unkontrollierter Falschluftzufuhr von außerhalb des Industrieofens, wobei die unkontrollierte Falschluftzufuhr vorzugsweise laufend durch Verbrennungsrechnung auf Grundlage von vorzugsweise kontinuierlich arbeitender Abgasanalysegeräte ermittelt wird. Ein Analysegerät ist insbesondere in Form einer Lambda-Sonde gebildet, welche vorzugsweise an als eine an sich bekannte Zirkonoxidsonde ausgeführt ist. Mit besonderem Vorteil versehen wird die als Zielgröße vorgegebene Luftüberschusszahl Lambda ($\lambda_{SOLL}$) der Verbrennungsluft durch die Brennstoffmenge geteilt und so ein laufend korrigiertes Luft-Brennstoff-Verhältnis gebildet, das dem $\lambda$-Regler der Regelschleife zugeführt wird. Zur verbesserten Bestimmung der Luftüberschusskennzahl ist es insbesondere vorteilhaft für mehrere simultan eingesetzte Brennstoffe Luftverhältnisse derart zu bilden, dass diese zueinander im Verhältnis des stöchiometrischen Luftbedarfes der jeweiligen Brennstoffe stehen. Dadurch ist es vorteilhaft möglich bei Veränderung der Anteile dieser Brennstoffe das unveränderte Sauerstoffangebot aufrecht zu erhalten. Beispielsweise kann zur Vermeidung von Nachteilen herkömmlicher Verfahren zunächst aus dem Ergebnis einer kontinuierlichen Abgasanalyse, z. B. an einem Regeneratorkopf, mit den Messwerten $O_2\%$ und $CO\%$ unter Einsatz einer Verbrennungsrechnung der Prozesswert für den wirklichen Luftüberschuss, ausgedrückt in der Luftüberschusszahl Lambda als Prozesswert bestimmt werden:

$$PV\_Lambda = 1 + const.1 * \frac{O_2\%}{20{,}94\% - O_2\%} - const.2 * \frac{CO\%}{CO_2\% + CO\%}$$

Dabei können die Eigenschaften des Brennstoffs und ebenso der Einfluss des $CO_2$ aus der Aufspaltung der im Rohgemenge enthaltenen Karbonate in den Konstanten const.1 und const.2 enthalten sein.

Im Unterschied zum Restsauerstoff $O_2\%$ ist der so gewonnene Prozesswert (Istwert) PV_Lambda gleichermaßen auch im unterstöchiometrischen Bereich, d. h. auch bei PV_Lambda < 1 zur Bewertung und Regelung der Verbrennungsverhältnisse geeignet und ist über dem gesamten technologisch interessierenden Bereich in einem linearen Verhältnis zu den Luftmengen. Er ermöglicht aufgrund dieser Linearität eine deutlich bessere und zielgenauere Regelung als eine auf den Restsauerstoffwert $O_2\%$ orientierte Regelung.

Damit kann die Summe aus unkontrollierten Falschluftverlusten und unkontrolliertem Falschluftzutritt als Störgröße der Regelung explizit ermittelt werden z.B. als

XF = PV_Lambda * L$_{MIN}$ * Brennstoffstrom - PV_Verbrennungsluft

mit dem Prozesswert PV_Verbrennungsluft des geregelten Verbrennungsluftstroms und der stöchiometrischen Mindestluft LMIN des Brennstoffes, abhängig nur von der chemischen Zusammensetzung des Brennstoffes.

Hier enthält die als Falschluft bezeichnete Größe XF die Summe aller Störungen und Fremdeinflüsse auf die Verbrennungsluftbilanz.

Vorzugsweise ist die Störgröße Falschluft XF als eine Prozessgröße kontinuierlich zu ermitteln und -bei geeigneter Falschluftindikation- durch hohen Ofendruck und Abdichtung des Ofens bestmöglich zu unterdrücken bzw. der verbleibende unvermeidbare Anteil auf seine Herkunft zu analysieren, um zulässige Regelgrenzen zu bestimmen. Ein ermittelter Sollwert der Verbrennungsluft wird vorteilhaft durch die Brennstoffmenge geteilt, um so ein laufend korrigiertes Luft-Brennstoff-Verhältnis zu bilden, das einer herkömmlichen Luftverhältnisregelung zugeführt werden kann.

**Weiterbildung**

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorzugsweise wird zusätzlich in einer weiteren Regelschleife für eine Temperaturregelung über eine Ofenraumtemperatur als Regelgröße, und einen ersten Regler, insbesondere einen PID-Regler, für die Ofenraumtemperatur, sowie über ein dem ersten Regler zugeordnetes Stellglied eine erste stellbare Stellgröße in Form eines Brennstoffstroms und/oder eines Verbrennungsluftstroms eingestellt. Insbesondere hat es sich als vorteilhaft erwiesen, dass in einer zweiten Regelschleife für eine Symmetrieregelung betreffend den linken und rechten Regenerator über eine für den Wärmeinhalt der Verbrennungsluft des ersten Regenerators signifikante erste Vorwärmekenngröße und eine für den Wärmeinhalt der Verbrennungsluft des zweiten Regenerators signifikante zweite Vorwärmekenngröße und einem zweiten Regler für den Unterschied der ersten und zweiten Vorwärmekenngröße, sowie über ein dem zweiten Regler zugeordnetes Stellglied eine zweite stellbare Stellgröße in Form einer den Wärmeübertrag zwischen dem ersten und zweiten Regenerator beeinflussenden Wärmeübertragungsgröße eingestellt wird.

Im Rahmen einer diese Weiterbildung besonders vorteilhaften Ausführung wird die zweite stellbare Stellgröße in Form einer den Wärmeübertrag zwischen dem ersten und zweiten Regenerator beeinflussenden Wärmeübertragungsgröße eingestellt, um den Betrag eines Unterschieds zwischen der ersten und zweiten Vorwärmekenngröße auf einen Wert unterhalb eines Schwellwerts nahe Null zu beschränken. Vorteilhaft kann als Wärmeübertragungsgröße eine erste Zeitspanne eingestellt werden, um welche für den heißeren des ersten und zweiten Regenerators die erste Periodendauer verlängert und/oder für den kälteren des ersten und zweiten Regenerators die erste Periodendauer verkürzt wird. Zusätzlich oder alternativ kann als Wärmeübertragungsgröße eine zweite Zeitspanne eingestellt werden, um welche für den kälteren des ersten und zweiten Regenerators die zweite Periodendauer verlängert und/oder für den heißeren des ersten und zweiten Regenerators die zweite Periodendauer verkürzt wird. Insbesondere kann bei einer Kombination die erste und zweite Zeitspanne gleichen Betrags sein.

Insbesondere können auf Grundlage des vorgenannten weiterbildenden Konzepts aus der Beobachtung der thermischen Symmetrie des linken und rechten Regenerators Informationen gewonnen werden darüber, ob der unkontrollierte Luftzutritt im Fußbereich des luftseitigen Regenerators oder erst im Ofenraum selbst erfolgt. Dabei lässtg die Anwendung des Konzepts der Erfindung zur Reaktion auf unkontrollierte Falschluft im Regeneratorfuß die thermische Symmetrie zwischen linksseitigem und rechtsseitigem Regenerator unbeeinträchtigt bzw. verbessert diese sogar. Im Falle des unkontrollierten Falschluftzutritts in den Ofenraum kann die Symmetrie der Regeneratortemperaturen jedoch sichtbar beeinträchtigt werden. Darum eignet sich das Verfahren gemäß dem Konzept der Erfindung unter geeigneter Falschluftindikation vorteilhaft zur Regelung eines Industrieofens ohne diese Symmetrie zu beeinträchtigen.

Dieser Ansatz wird insbesondere vorteilhaft unterstützt, indem ein Mindestwert des Ofendrucks als Stabilitätsgrenze eingehalten wird, wobei bei Unterschreitung der Stabilitätsgrenze eine Senkung des Verbrennungsluftstroms zu höherer Ansaugung von unkontrollierter Falschluft führt, während für Ofendruckwerte oberhalb der Stabilitätsgrenze die unkontrollierte Falschluft nicht oder nur unwesentlich durch unterschiedlich hohen Verbrennungsluftstrom beeinflusst wird. Desweiteren hat es sich dazu auch als vorteilhaft erwiesen, eine Mindestmenge des geregelten Verbrennungsluftstroms derart zu begrenzen, dass eine Temperatur des luftseitigen Regenerators unterhalb eines vorgegebenen Temperaturschwellwertes bleibt.

Insbesondere kann als Kriterium für die thermische Symmetrie der Regeneratoren eine Symmetrieregelung durch automatische Verschiebung der Periodenzeiten der Feuerung zwischen linkem und rechtem Regenerator verwendet werden. Die Verwendung der obengenannten Weiterbildung kann zum Beispiel eine langzeitlich dauerhafte Verschiebung der Periodenzeiten zwischen linker und rechter Feuerseite erforderlich machen, um die Regeneratorkopftemperaturen für beide Feuerseiten symmetrisch zu erhalten. Dieser Umstand kann in einer vorteilhaften Weiterbildung als Falschluftindikation genutzt werden. Bei korrekter Falschluftindikation verhindert dies eine übermäßige Vergrößerung der Temperaturunterschiede zwischen den Regeneratorseiten und darum eine höhere Verschiebung der Periodenzeiten, um die Symmetrie aufrecht zu erhalten. Vorzugsweise wird somit der Unterschied zwischen der ersten und zweiten Vorwärmekenngröße als Regelergebnis der zweiten Regelschleife im Rahmen der Falschluftindikation zur Bewertung eines unkontrollierten Lufteinbruchs im Ofenraum und/oder Regenerator verwendet. Insbesondere kann dies auch zur weiteren Bewertung des Zustandes des Regenerators und/oder zur Bewertung einer weiteren Einflussgrößen verwendet werden. Beispielsweise kann die Falschluftindikation darauf erkennen, dass Falschluft stromabwärts nach dem luftseitigen linken und/oder rechten Regenerator, insbesondere in dem Ofenraum, zutritt, für den Fall, dass auf einer die Periodendauer mehrfach übersteigenden Zeitskala im Mittel eine Erwärmung des Regenerators vorliegt. Insbesondere ist dies der Fall, wenn im Mittel für den ersten Regenerator die erste Periodendauer verlängert und/oder die zweite Periodendauer wiederholt verkürzt wird.

Vorteilhaft können darüberhinaus im Rahmen der Falschluftindikation aus der Beobachtung und/oder Analyse des zeitlichen Trends der Menge unkontrollierter Luft während der Zeit einer Feuerperiode der regenerativen Beheizung auch charakteristische und periodisch wiederkehrende Trendmuster ermittelt werden, insbesondere zur Glättung der laufenden Prozesswerte unkontrollierter Luft und zur vorausschauenden Regelung verwendet werden.

Beispielsweise kann der Einfluss eines systematischen Messfehlers des Verbrennungsluftstromes auf die Ermittlung der unkontrollierten Luftzufuhr durch Vergleich zweier oder mehrerer Betriebszustände mit unterschiedlichem Brennstoffeinsatz ausgeschaltet werden. Dabei ist die Verbrennungsluftmengenmessung so zu korrigieren ist, dass für verschiedene Betriebszustände die Analyse der Verbrennungsluft gleiche oder nur gering unterschiedliche Mengen an unkontrollierter Luftzufuhr ergibt.

Insbesondere schließt die unkontrollierte Luftzufuhr auch unkontrollierten Luftverlust mit ein. Zum Beispiel kann dies durch undichte Umsteuerorgane, bei denen ein Teil der Verbrennungsluft im Kurzschlussstrom in den Abgasstrom eintritt, geschehen. Vorzugsweise werden solche Luftverluste durch einen über die Dauer der Regenerativperiode zeitlich abfallenden Trend erkannt oder durch eine im Gefolge des Umsteuervorgangs zwischen den Feuerseiten plötzlich eintretende starke Verringerung des Wertes der unkontrollierten Luft bis hin zu negativWerten derselben.

Ausführungsbeispiele der Erfindung werden nun nachfolgend anhand der Zeichnung beschrieben. Diese soll die Ausführungsbeispiele nicht nur notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf dem einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

Fig. 1 eine schematische Darstellung eines regenerativ beheizten Industrieofens mit einem linken und einem rechten Regenerator gemäß einer besonders bevorzugten Ausführungsform, bei der eine Steuereinrichtung mit einem λ-Regel-Modul gemäß dem Konzept der Erfindung vorgesehen ist;

Fig. 2 eine schematische Darstellung einer Regelschleife für eine Lambda-Regelung kombiniert mit einer Falschluftindikation bei der Steuereinrichtung der Fig. 1 gemäß dem Konzept der Erfindung;

Fig. 3 den zeitlichen Verlauf eines Unterschieds der ersten und zweiten Vorwärmekenngröße in Form jeweils einer Wärme aus vorgewärmter Verbrennungsluft im weitgehend eingeschwungenen symmetrischen Zustand des Systems aus linkem und rechtem Regenerator zusammen mit einer eingestellten Zeitspanne als Wärmeübertragungsgröße gemäß der für den kälteren Regenerator eine Periodendauer zur Abführung von Abgas aus dem Ofenraum verlängert und/oder für den heißeren Regenerator eine Periodendauer zur Abführung von Abgas aus dem Ofenraum verkürzt ist.

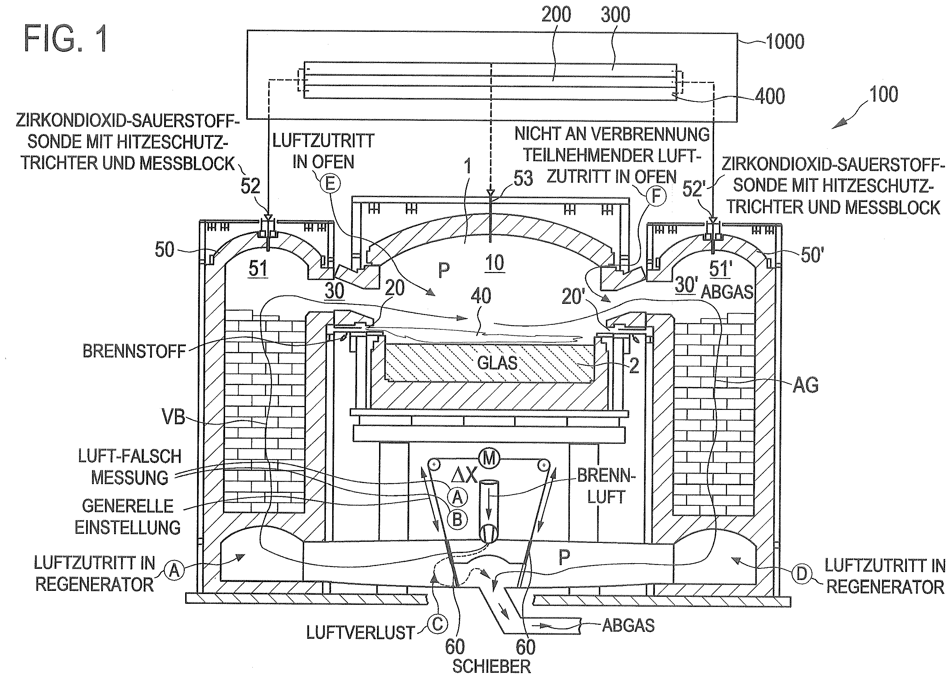

Fig. 1 zeigt in vereinfachter Darstellung einen regenerativ beheizten Industrieofen 100 mit einem Ofenraum 10, dessen Oberofenraum 1 als Regelstrecke geregelt wird und bei dem der Unterofenraum 2 eine nicht näher dargestellte Glasschmelzwanne aufweist. In der Glasschmelzwanne enthaltenes Glas wird über den Ofenraum 10 über die Schmelztemperatur erwärmt und zur Herstellung von Flachglas oder dergleichen aufgeschmolzen und geeignet behandelt. Der Industrieofen 100 wird vorliegend erwärmt, indem über mehrere seitlich angebrachte Brennstoffinjektoren 20 Brennstoff, vorliegend in Form von Brenngas, in den Oberofen 1 injiziert wird. Von den Brennstoffinjektoren 20 ist vorliegend ein linker Injektor 20 dargestellt. Von weiteren Brennstoffinjektoren 20' ist vorliegend ein rechter Injektor 20' dargestellt. Der Einfachheit halber sind im folgenden für gleiche oder ähnliche Teile oder solche mit gleicher oder ähnlicher Funktion gleiche Bezugszeichen verwendet. Beispielsweise können linksseitig bzw. rechtsseitig jeweils eine Anzahl von sechs Injektoren 20, 20' vorgesehen sein. In der in Fig. 1 gezeigten Befeuerungsperiode wird über einen Brennstoffinjektor 20 Brenngas in den Oberofen 1 praktisch ohne Verbrennungsluft injiziert. Oberhalb des Brennstoffinjektors 20 wird vorgewärmte Verbrennungsluft VB über eine linksseitige Öffnung 30 dem Oberofen 1 zugeführt. Die Verbrennungsluft aus der Öffnung 30 vermischt sich im Oberofen 1 mit dem vom Brennstoffinjektor 20 injizierten Brenngas und führt zur Ausbildung einer den Unterofen überdeckenden Flamme 40, die vorliegend symbolisch dargestellt ist. Das Bild der Fig. 1 zeigt den Industrieofen 100 im Zustand einer regenerativen Befeuerung über den linken Regenerator 50 und die linken Injektoren 20. Diese und die Öffnung 30 sind derart gestaltet, dass das über die Injektoren 20 gelieferte Brenngas in ausreichendem nah- oder unter stöchiometrischen Bereich mit Verbrennungsluft VB des linken Regenerators im Oberofen 1 vermischt wird. Der in Fig. 1 dargestellte Betriebszustand einer linksseitigen Befeuerung des Oberofens 1 unter Injektion von Brenngas über die linksseitigen Injektoren 20 und Zufuhr von Verbrennungsluft VB über den linken Regenerator 50 dauert für eine erste Periodendauer an von z.B. 20 bis 40 min. an. Während dieser ersten Periodendauer wird Verbrennungsluft VB zum Oberofen 1 im Ofenraum 10 separat vom Brenngas 20 zugeführt. Während der ersten Periodendauer wird Abgas AG aus dem Oberofen 1 über rechtsseitige Öffnungen 30' dem rechten Regenerator 50' zugeführt und heizt diesen auf.

In einem zweiten Betriebszustand wird für eine zweite Periodendauer ähnlicher zeitlicher Länge die Befeuerung des Oberofens 1 umgekehrt. Dazu wird dann Verbrennungsluft VB über den rechten Regenerator 50' dem Oberofen 1 zusammen mit Brenngas aus den rechten Injektoren 20' zugeführt, wobei die Verbrennungsluft VB dann die vom Abgas AG in der ersten Periodendauer im Regenerator 50' deponierte Wärme aufnimmt.

Die Regelung eines Brennstoffstroms und/oder eines Verbrennungsluftstroms erfolgt grundsätzlich über ein Temperaturregelmodul 400 einer Steuereinrichtung 1000 für den Industrieofen 100. Grundsätzlich kann dazu ein PID-Regler im Temperaturregelmodul 400 eingesetzt werden, gemäß dem unter Erhöhung des Brennstoffstroms und/oder des Verbrennungsluftstroms eine Ofenraumtemperatur erhöht bzw. unter Erniedrigung eines Brennstoffstroms und/oder eines Verbrennungsluftstroms eine Ofenraumtemperatur erniedrigt wird. Dem Temperaturregelmodul 400 werden Temperaturwerte des Regeneratorkopfes 51 bzw. 51' oder des Oberofenraumes 1 über geeignete Temperatursonden 52, 52', 53 zugeführt, die vorliegend jedenfalls zum Teil auch mit einer geeigneten Lambdasonde zur Messung eines Brennstoff-Luft-Verhältnisses kombiniert sind.

Die Steuereinrichtung 1000 weist darüberhinaus ein Symmetrieregelmodul 300 auf, das vorliegend ausgebildet ist, den Wärmeübertrag zwischen dem ersten und zweiten Regenerator 50, 50' zu beeinflussen. Vorliegend erfolgt dies über eine Wärmeübertragungsgröße in Form einer Zeitspanne $\pm \Delta t$, um welche für den kälteren des ersten und zweiten Regenerators 50, 50' die zweite Periodendauer t verlängert und/oder für den heißeren des ersten und zweiten Regenerators 50, 50' die zweite Periodendauer t verkürzt wird oder auch für den kälteren des ersten und zweiten Regenerators 50, 50' die erste Periodendauer t verkürzt und/oder für den heißeren des ersten und zweiten Regenerators 50, 50' die erste Periodendauer t verlängert wird. Ein geeignetes Stellglied in Form eines Zeitgebers ist vorliegend mit dem Symmetrieregelmodul 300 gekoppelt und in der Lage, die erste und zweite Periodendauer t je nach Maßgabe des Symmetrieregelmoduls 300 zu verkürzen bzw. zu verlängern - letzteres kann vorliegend also die Periodendauer um die Zeitspanne $\pm \Delta t$ beim linken Regenerator 50 bzw. rechten Regenerator 50' verschieben.

Darüberhinaus sieht das vorliegende zur automatischen Regelung der Verbrennungsluftzufuhr des regenerativen Industrieofens 100 mit einer regenerativ befeuerten Glasschmelzwanne vor, dass der Verbrennungsluftstrom durch einen an sich bekannten PID Regler eines λ-Regelmoduls 200 automatisch geregelt wird. Der Sollwert des PID Reglers wird gebildet aus dem Produkt der Brennstoffmenge, dem stöchiometrischen Luftbedarf dieses Brennstoffs und einer als Zielgröße vorgegebenen Luftüberschusszahl $\lambda_{SOLL}$, abzüglich der laufend ermittelten Menge an unkontrollierter Luftzufuhr von außerhalb des Industrieofens. Dem Konzept der Erfindung folgend wird die unkontrollierte Luftzufuhr laufend durch Verbrennungsrechnung auf Grundlage kontinuierlich arbeitender Abgasanalysegeräte ermittelt, die hier in Kombination mit den Temperatursonden 52, 52', 53 durch an sich bekannte Zirkonoxidsonden gebildet sind. Bei Einsatztemperaturen zwischen 700 und 1500 °C erreichen Zirkonsonden eine Lebensdauerwerte von ca. 3 Jahren, in besten Fällen bis zu 8 Jahren. Auch unter teilweise extrem reduzierenden Bedingungen oder Abgasverunreinigungen durch Schwermetalloxide werden gute Standzeiten erreicht. Maßgeblich dafür ist neben der robusten, industrietauglichen Ausführung vor allem der regelmäßige Service. Damit ist das Messsignal der Zirkonoxidsonden ausreichend stabil und reproduzierbar, um als Grundlage für eine automatische Regelung zu dienen.

Eine oben erläuterte Regelung mittels des λ-Regelmoduls 200 wird folgend als "Lambdaregelung" bezeichnet. Grundsätzlich ist die Luftüberschusszahl λ definiert als Verhältnis aus real verfügbarer Luft - d.h. kontrollierter Luftmenge plus Falschluft - geteilt durch den stöchiometrischem Mindest-luftbedarf für die aktuelle Brennstoffmenge.

$$Lambda = \frac{gemessene Brennluftmenge + Falschluft}{Stöchiometrische Mindestluft}$$

Der aktuelle Prozesswert λ wird aus dem Messergebnis (mV) der Zirkonoxidsonde direkt bestimmt, auch für Brennstoff-Mischfahrweise z. B. Gas und Öl, auch im unterstöchiometrischen Bereich λ < 1. Dabei sind Zellspannungen von Null bis 200 mV ein Maß für abnehmenden Sauerstoffgehalt von 20,94 % bis herab zu 0 %, weiter steigende Zellspannungen von 200 mV bis ca. 800 mV sind dagegen im zunehmend reduzierenden Bereich ein Maß für zunehmenden Anteil von CO.

Voraussetzung für die Bestimmung des Prozesswertes λ aus dem Messergebnis der Zirkonoxidsonde ist die Kenntnis der chemischen Brennstoffzusammensetzung. Gaschromatographen sind nur in luxuriösen Ausnahmefällen on-line vorhanden. Für schwankende Heizwerte wird eine charakteristische Zusammensetzung des Brennstoffs als "Arbeitspunkt" hinterlegt und mit veränderten Heizwerten proportional mitgeführt. Darauf aufbauend liefert eine Verbrennungsrechnung eine dimensionslose Brennstoffkennzahl - für Gas ebenso wie für Öl - und nachfolgend die reale Luftmenge, die Abgasmenge, die Abgasbestandteile und -von eigentlichem Interesse im vorliegenden Fall- die Falschluft XF als Differenz zwischen Sonden-ermittelter Luft und kontrolliertem Luftstrom.

Anders als der Messwert $O_2$% steht der gemessene Prozesswert λ im gesamten technologisch interessierenden Bereich 1,5 > λ > 0,96 zur Verfügung und verhält sich direkt linear zur überschüssigen oder zur fehlenden Brennluft. Das ermöglicht eine effiziente Regelung, die fehlende oder überschüssige Luft zielgenau bestimmen kann, ohne sich mit dem Zeitverhalten einer Regelstrecke abzumühen. Dem Sollwert $\lambda_{SOLL}$ -nichtlinear umrechenbar in den gewünschten $O_2$%-Wert und umgekehrt- wird der Prozesswert $\lambda_{IST}$ gegenübergestellt

Grundsätzlich bedeutet Lambdaregelung bei der vorliegenden Ausführungsform:

- Falschluft aktuell bestimmen und sichtbar machen

- Falschluft unterdrücken oder mindern

- unvermeidliche Falschluft kompensieren

Welches der optimale Wert ist, hängt ab von den Eigenschaften des Brennraums und den Anforderungen des Schmelzgutes - in den meisten Fällen ist ein Lambdawert zwischen um λ = 1,04 .. 1,05 ein guter Wert - entspricht $O_2$% Werten zwischen 0,8 und 1,0 %.

Konkret wird um die Nachteile der herkömmlichen Verfahren zu vermeiden, dem Konzept der Erfindung folgend also zunächst aus dem Ergebnis einer kontinuierlichen Abgasanalyse am Regeneratorkopf mit den Messwerten $O_2$% und CO% unter Einsatz einer Verbrennungsrechnung der Prozesswert für den wirklichen Luftüberschuss, ausgedrückt in der Luftüberschusszahl λ als Prozesswert (Istwert) bestimmt:

$$PV\_Lamda = 1 + const.1 * \frac{O_2\%}{20,94\% - O_2} - const.2 * \frac{CO\%}{CO_2\% + CO\%}$$

wobei die Eigenschaften des Brennstoffs und ebenso der Einfluss des $CO_2$ aus der Aufspaltung der im Rohgemenge enthaltenen Karbonate in den Konstanten const.1 und const.2 enthalten sind.

Im Unterschied zum Restsauerstoff $O_2$% ist der so gewonnene Prozesswert PV_Lambda gleichermaßen auch im unterstöchiometrischen Bereich, d. h. bei

PV_Lambda < 1 zur Bewertung und Regelung der Verbrennungsverhältnisse geeignet und ist über dem gesamten technologisch interessierenden Bereich in einem linearen Verhältnis zu den Luftmengen. Er ermöglicht aufgrund dieser Linearität eine deutlich bessere und zielgenauere Regelung als eine auf den Restsauerstoffwert O2% orientierte Regelung.

Damit kann die Summe aus unkontrollierten Luftverlusten und unkontrolliertem Luftzutritt als Störgröße der Regelung explizit ermittelt werden als

$$XF = PV\_Lambda * LMIN * Brennstoffstrom - PV\_Verbrennungsluft$$

mit dem Prozesswert PV_Verbrennungsluft des geregelten Verbrennungsluftstroms und der stöchiometrischen Mindestluft LMIN des Brennstoffes, abhängig nur von der chemischen Zusammensetzung des Brennstoffes.

Die als Falschluft bezeichnete Größe XF enthält die Summe aller Störungen und Fremdeinflüsse auf die Verbrennungsluftbilanz.

Die Störgröße Falschluft XF wird vorliegend als eine Prozessgröße kontinuierlich ermittelt. Dies kann dann durch hohen Ofendruck und Abdichtung des Ofens bestmöglich unterdrückt und der verbleibende unvermeidbare Anteil auf seine Herkunft zu analysiert werden, um die zulässigen Regelgrenzen zu bestimmen.

Zunächst weiter bezugnehmend auf Fig. 1 kann für ein technologisches Regelverhalten eine on-line Analyse der Falschluftquellen erfolgen unter Bewertung der Kurz- und Lang-Zeittrends der A-Signale und der thermischen Spur der Falschluft im Ofen und Regenerator. Falschluftquellen können sein:

(A) Ungenauigkeiten in der Messung von Brennluftstrom oder Brennstoffmenge wirken rechnerisch als Abweichung der Brennluftbilanz ebenso wie reale Falschluft, wirken für beide Feuerseiten genau gleich und werden sichtbar am Vergleich verschiedener Betriebspunkte der Anlage mit deutlich verschiedenem Brennstoffeinsatz

(B) "Abdriftende Falschluft", z. B. über Wochen aus zunehmender Verschmutzung und zunehmender Minderanzeige der Brennluftmengenmessung wirken wie Falschluft und können richtig auch so automatisch kompensiert werden. Der Einfluss einer systematischen Missweisung der Verbrennungsluftmengenmessung (A) und (B) auf die Störgröße XF ist naturgemäß für beide Feuerseiten identisch und wird durch Vergleich zweier oder mehrerer Betriebszustände mit unterschiedlichem Brennstoffeinsatz ermittelt. Solche systematische Missweisung der Verbrennungsluftmengenmessung ist durch Korrektur zu beseitigen und kann bis zur Beseitigung auch durch Anpassung der Verbrennungsluft kompensiert werden.

(C) Ein Luftverlust, d. h. Kurzschlussstrom eines Teils der Brennluft durch Undichtigkeit des Umsteuerschiebers direkt in den Abgasstrom markiert sich durch negative Falschluftwerte plus abfallenden Trend des Lambdawertes über die Feuerperiode, typisch auch seitenverschieden oder sporadisch mit dem Wechselvorgang auftretend - aber nicht mit jedem.
Es wurde gefunden, dass ein durch undichte Umsteuerschieber verursachter Luftverlust (C) durch fallenden Trend der Prozessgröße Sauerstoff oder Falschluft identifiziert werden kann. Ein Luftverlust ist durch Abdichtung des Umsteuerschiebers zu beseitigen und kann bis zur Abdichtung ohne Einschränkung durch Anpassung der Verbrennungsluft kompensiert werden.

(D) Falschluftzutritt in den Regenerator ist typisch seitenverschieden und tritt im Kammerfußbereich auf - dort herrscht mit etwa -20 Pa der stärkste Unterdruck, d.h. die hier eintretende Falschluft wird im Regenerator mit erwärmt bzw. kühlt in ebenso wie die regulär gemessene Brennluft
Ein Zutritt unkontrollierter Luft zum Regeneratorfuß (D) ist dadurch zu identifizieren, dass seine Kompensation durch veränderte Verbrennungs-luftmenge keine Störung der Symmetrie zwischen linkem und rechtem Regenerator verursacht sondern im Gegenteil die thermische Symmetrie der Regeneratoren verbessert. Der hiervon unvermeidliche Anteil, der nicht durch Abdichtung der Regeneratoren vermieden werden kann, kann ohne Einschränkung durch Anpassung der Verbrennungsluft kompensiert werden.

(E) Falschluftzutritt in den Ofenraum kann feuerseitenverschieden sein infolge eines beeinflussenden Druckfeldes im Ofen. Grundsätzlich ist es auch möglich, dass dieser feuerseitengleich ist; im Falle eines feuerseitenverschiedenen Falschluftzutritts in den Oberofen führt dies zu einer weiteren Zunahme der thermischen Unsymmetrie im Falle der Luftkompensation. Unabhängig von feuerseitenverschiedenem oder feuerseitengleichem Falschluftzutritt führt ein Falschluftkompensation zu einer im Mittel ansteigenden Regeneratortemperatur: Kalte Luft, die nicht an der Erwärmung im Regenerator teilnimmt, entzieht dem Ofenraum Wärme und tritt als heißes Abgas in den gegenüberliegenden Regenerator ein - sie markiert sich durch eine Erhöhung der Regeneratortemperaturen.

(F) Der negative Effekt wird um so deutlicher, je weniger diese Luft dann auch noch an der Verbrennung teilnimmt.

Ein Zutritt unkontrollierter Luft in den Ofenraum (E) und (F) verursacht dagegen eine typische Störung der Symmetrie der Regeneratortemperaturen zwischen linkem und rechtem Regenerator, der Versuch solche unkontrollierte Luft in den Ofenraum XF durch Anpassung der Verbrennungsluftmenge zu kompensieren führt zur Vergrößerung der thermischen Unsymmetrie der Regeneratoren und zur Erhöhung der Regeneratortemperaturen. Der Zutritt unkontrollierter Luft zum Ofenraum ist aufgrund der thermischen Spur im Regenerator zu identifizieren und darf nicht oder nur in engen Grenzen durch Anpassung der Verbrennungsluft kompensiert werden, er kann nur durch Abdichtung des Ofenraumes und durch Erhöhung des Ofendrucks gemindert werden.

Zusammenfassend gilt für alle Formen (A) bis (D) von Falschluft, die stromaufwärts vor dem Regenerator wirken, generell, dass vorzugsweise die Ursachen zu erkennen und beseitigen sind. Für alle Falschluft die nicht vermieden werden kann, ist die automatische Kompensation durch Anpassung der Brennluftmenge die technologisch angemessene Reaktion. Es wurde jedoch gefunden, dass unterhalb eines Mindestwertes des Ofendrucks eine Minderung der Verbrennungsluftmenge eine Erhöhung der Menge unkontrollierter Luft XF nach sich zieht. Solange die ermittelte Menge unkontrollierter Luft durch eine Veränderung der Verbrennungsluftmenge nicht merklich beeinflusst wird, ist der Ofendruck ausreichend hoch für eine stabile Regelung. Unterhalb dieser Stabilitätsgrenze kann der Sollwert SP_Lambda nicht zuverlässig durch Anpassung der Verbrennungsluftmenge erreicht werden, sondern verlangt eine entsprechende Erhöhung des Ofendrucks.

Falschluft, die in den Ofenraum eintritt - Fälle (E) und (F), führt nicht nur zu den größtmöglichen Energieverlusten aus Falschluft, sie stört das thermische Gleichgewicht der Regeneratoren rechts/links. Der Versuch, solche Falschluft durch Brennluftanpassung zu kompensieren, führt jedoch zur Erhöhung der Regeneratortemperaturen und zur Verschärfung thermischer Unsymmetrie. Die technologisch angemessene Antwort ist nicht mehr Brennluftanpassung, sondern Abdichten des Ofens und Erhöhung des Ofendrucks, um den Falschluftzutritt zu unterbinden oder zu mindern.

Die vorstehenden Überlegungen machen deutlich, dass die einfache $O_2\%$ Messung gemäss einem Stand der Technik nicht ausreicht: Erst die Auswertung der Sauerstoffbilanz der gegebenen Feuerung und die explizite Bestimmung der Falschluftmenge - plus die Auswertung der thermischen Spur dieser Falschluft in den Regeneratoren ermöglichen die on-line Ursachenanalyse und die Auswahl der technologisch angepassten Regelstrategie.

Erfindungsgemäß ist die Kompensation der unkontrollierten Luft XF durch Anpassung der Verbrennungsluftmenge gemäß dem Konzept der Erfindung nur zulässig, solange

a) die unkontrollierte Luft XF direkt in den Ofenraum eintritt, was durch Störung der Symmetrie der Regeneratortemperaturen und durch Temperaturerhöhung der Regeneratoren sichtbar wird

b) die unkontrollierte Luft XF unabhängig von der Verbrennungsluftmenge ist und insbesondere zu dieser in keiner umgekehrt proportionalen Abhängigkeit steht.

Unterhalb der so definierten Stabilitätskriterien ist die unkontrollierte Luft XF nur durch Erhöhung des Ofendrucks minderbar.

Oberhalb der so definierten Stabilitätskriterien kann die unkontrollierte Luft in weiten Grenzen durch automatische Anpassung der Verbrennungsluftmenge kompensiert werden um einen vorgegebenen Sollwert des Luftüberschusses SP_Lambda zu einzuhalten.

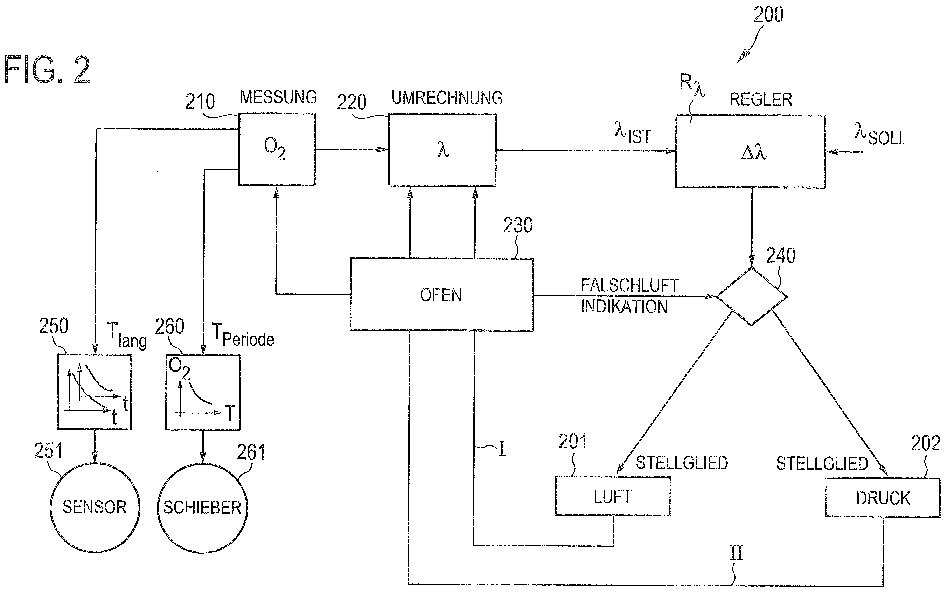

Das geht weit über ein aus dem Stand der Technik bekanntes "Sauerstoff-Trimming" hinaus. Eine SPS hat sowohl die Rechenleistung als auch alle Prozessdaten aktuell verfügbar, um auf diese Weise zum "Expertensystem" für Analyse und Kontrolle der aktuellen Sauerstoffbilanz zu agieren. Dazu nutzt sie ein hinterlegtes "Modell" der physikalischen Grundzusammenhänge. Fig. 2 zeigt dazu ein geeignetes Regelschema einer automatischen Regelung der Verbrennungsluftzufuhr des regenerativen Industrieofens 100 mit einer regenerativ befeuerten Glasschmelzwanne. Fig. 2 zeigt schematisch eine zur Durchführung des Verfahrens geeignete Regelschleife, die mit geeigneten Modulen als Grundlage eines λ-Regelmoduls 200 der Steuereinrichtung 1000 zur Durchführung des Verfahrens dienen kann.

Die Regelschleife des λ-Regelmoduls 200 sieht ein Messglied 210 in Form eines Abgasanalysegeräts vor. Vorliegend ist das Abgasanalysegerät in Form einer in Fig. 1 gezeigten Lambdasonde 52, 52', jeweils im Kopf 51, 51' des linken bzw. rechten Regenerators 50, 50' und als Lambdasonde 53 im Oberofen 1 gebildet. Über das Messglied 210 kann so ein Sauerstoffgehalt des Abgases zur direkten Ermittlung einer Luftüberschusszahl λ des Abgases gemessen werden. Der Sauerstoffmesswert wird dazu einem Rechenmodul 220 zugeführt, in welchem die Luftüberschusszahl λ als Prozesswert gemäß der oben angegebenen Rechenvorschrift wird (PV_Lamda) ermittelt wird. Die auf diese Weise bestimmte Luftüberschusszahl λ wird einem Lamdaregler $R_λ$ der Regelschleife des λ-Regelmoduls 200 als Istwert $λ_{IST}$ zur Verfügung gestellt. Der Lamdaregler $R_λ$ gibt unter Abgleich des Istwerts $λ_{IST}$ mit dem vorgegebenen Sollwert $λ_{SOLL}$ eine Regelabweichung Δλ aus, die durch Anpassung einer geeigneten Stellgröße in der Regelstrecke 230 regelnd beseitigt werden soll. Vorliegend ist dem Konzept der Erfindung folgend vorgesehen, dass die Regelschleife des λ-Regelmoduls 200 eine Auswahl von zwei Stellgrößen bietet - nämlich zum einen eine erste Stellgröße 201 in Form von Verbrennungsluft und zum anderen eine zweite Stellgröße 202 in Form des Ofendrucks zur Verfügung stellt. Die erste Stellgröße 201 wird mit einem geeigneten Stellglied in einem ersten Teil I der Regelschleife des λ-Regelmoduls 200 eingestellt. Die zweite Stellgröße 202 wird in einem zweiten Teil II der Regelschleife des λ-Regelmoduls 200 eingestellt. Vorliegend wird mittels einer Falschluftindikation an der Regelstrecke des Industrieofens 100 ermittelt, ob eine Falschluft in einem ersten Fall stromaufwärts in oder vor dem luftseitigen linken und/oder Regenerator 50, 50' zutritt oder ob eine Falschluft in einem zweiten Fall stromabwärts nach dem luftseitigen linken und/oder rechten Regenerator 50 , 50' zutritt, insbesondere in dem Ofenraum 10 zutritt. Die Falschluftindikation koppelt dazu in geeigneter Weise insbesondere den Ofenraum 10 und die Regeneratoren 50, 50' mit einem Entscheidungsmodul 240 der Regelschleife des λ-Regelmoduls 200. Auch die weiter oben unter (A)-(F) genannten Orte können bei Bedarf mit dem Entscheidungsmodul 240 gekoppelt sein. Für den ersten Fall wird durch das Entscheidungsmodul 240 ein Schalter betätigt, welcher die Regelschleife in dem ersten Teil I aktiviert. In dem zweiten Fall wird über das Entscheidungsmodul 240 ein Schalter betätigt, welcher den zweiten Teil II der Regelschleife 200 aktiviert. Wie oben ausgeführt ist, wird auf diese Weise gewährleistet, dass die Falschluft unter automatischer Anpassung von Verbrennungsluft mittels des ersten Stellglieds 201 automatisch kompensiert wird (Fälle (A) bis (E)). Für den Fall, dass die Falschluftindikation auf Falschluft stromabwärts nach dem luftseitigen linken und/oder rechten Regenerator 50, 50', insbesondere im Ofenraum 10, erkennen sollte (Fälle (E), (F)), wird der zweite Teil II der Regelschleife des λ-Regelmoduls 200 aktiviert. In dem Fall wird vorliegend über ein zweites Stellglied 202 in Form der in Fig. 1 gezeigten Schiebereinheit 60 in der Abgasabführung ein Gegendruck P zum Ofendruck p ausgebildet. Auf diese Weise kann der Ofendruck in der Regelstrecke 230 erhöht werden, um die Regelabweichung Δλ auszugleichen.

Die Regelschleife des λ-Regelmoduls 200 weist darüber hinaus an das Messglied 210 angeschlossene erste und zweite Messwertverlaufsmodule 250, 260 auf.

Beispielsweise kann der Einfluss eines systematischen Messfehlers des Verbrennungsluftstromes auf die Ermittlung der unkontrollierten Luftzufuhr durch Vergleich zweier oder mehrerer Betriebszustände mit unterschiedlichem Brennstoffeinsatz ausgeschaltet werden. Dabei ist die Verbrennungsluftmengenmessung so zu korrigieren ist, dass für verschiedene Betriebszustände die Analyse der Verbrennungsluft gleiche oder nur gering unterschiedliche Mengen an unkontrollierter Luftzufuhr ergibt. Das auf einer längeren Zeitskala aktive Messwertverlaufsmodul 250 ist in der Lage, Verläufe des Sauerstoffmesswerts über einen vergleichsweise langen Zeitraum zu speichern und als zeitlichen Verlauf auf relativ langer Zeitskala t darzustellen. Es hat sich gezeigt, dass ein beispielsweise abfallender zeitlicher Verlauf des Sauerstoffmesswerts als Indikation genutzt werden kann, um eine Überprüfung eines Sensors 251 -zum Beispiel der Lambdasonden 52, 52'- zu veranlassen.

Insbesondere schließt die unkontrollierte Luftzufuhr auch unkontrollierten Luftverlust mit ein. Zum Beispiel kann dies durch undichte Umsteuerorgane, bei denen ein Teil der Verbrennungsluft im Kurzschlussstrom in den Abgasstrom eintritt, geschehen. Vorzugsweise werden solche Luftverluste durch einen über die Dauer der Regenerativperiode zeitlich abfallenden Trend erkannt oder durch eine im Gefolge des Umsteuervorgangs zwischen den Feuerseiten plötzlich eintretende starke Verringerung des Wertes der unkontrollierten Luft bis hin zu negativ Werten derselben. Das zweite Messwertverlaufsmodul 260 ist dementsprechend für eine vergleichsweise kurze Zeitskala ausgelegt und in der Lage Sauerstoffmesswerte wenigstens über eine Periodendauer T zu speichern und als zeitlich transienten Verlauf über die Periodendauer darzustellen. Es hat sich gezeigt, dass bei wiederholt abfallendem Sauerstoffmesswert über die Periodendauer T darauf erkannt werden kann, dass eine Schieber 261, beispielsweise der in Fig. 1 dargestellte Schiebereinheit 60 zwischen Verbrennungsluftzuführung und Abgasabführung undicht ist. Dies betrifft den in Fig. 1 dargestellten Falschluftfall (C) der oben ausgeführt ist.

Zur Erkennung eines etwaigen Einflusses der Kompensation unkontrollierter Luft XF auf die thermische Symmetrie der Regeneratoren, dient erfindungsgemäß der Ausgang einer Symmetrieregelung, bei der die Regeneratorkopftemperaturen des linken und rechten Regenerators durch automatische Verschiebung der Periodenzeiten einander angeglichen werden, um auch die Gewölbetemperaturen der Schmelzwanne für Feuer Links und Feuer Rechts einander anzugleichen. Dazu wird die Periodendauer auf der heißeren Seite verlängert, auf der kälteren Seite um das gleiche Maß verkürzt. Kann die Symmetrieregelung den Unterschied der Periodenzeiten nach Energieausgleich zwischen den Regeneratoren wieder etwa auf Null reduzieren, und wird dieser Gleichgewichtszustand auch bei aktiver Kompensation der unkontrollierten Luft XF durch Anpassung der Verbrennungsluft-menge immer wieder erreicht, so besteht keine Beeinträchtigung der thermischen Regeneratorsymmetrie durch die Falschluftkompensation, sie ist also unbedenklich.

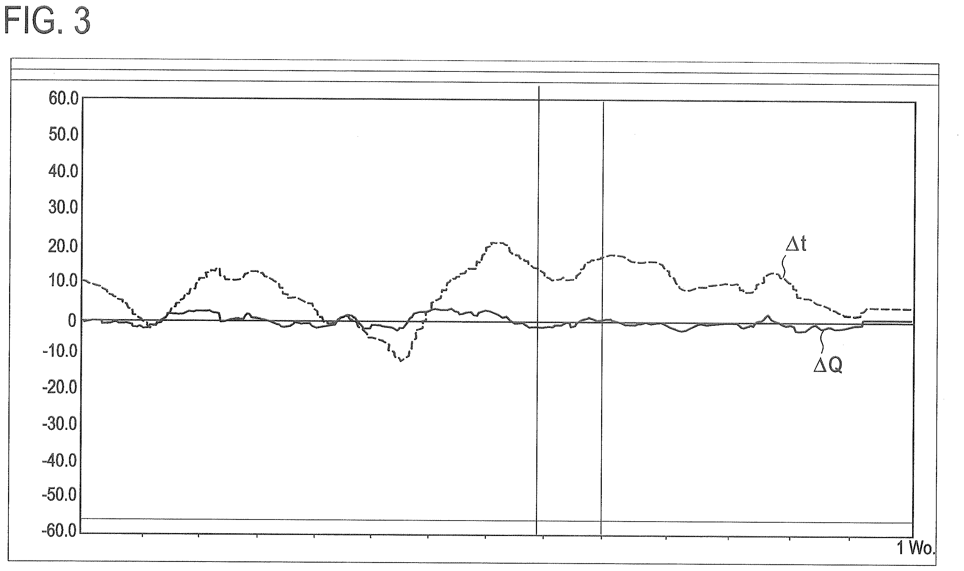

Ein Symmetrieregler RS des Symmetrieregelmoduls 300 regelt vorliegend den in Fig. 3 näher gezeigten Unterschied AQ der Wärmemengen zu Null. Dazu stellt der Symmetrieregler RS für die Regeneratoren 50, 50' eine Zeitspanne $\pm\Delta t$ zur Verfügung, mit der die Periodendauer t für die Befeuerung des Oberofens 1 über die Regeneratoren 50, 50' verändert wird. Aus der Fig. 3 ist beispielhaft ersichtlich, dass für einen vergleichsweise großen Zeitraum für den linken Regenerator 50 ein positiver Wert von $+\Delta t$ überwiegt. Dies kann im Rahmen eines besonders bevorzugten Auswertemoduls zur technologischen Bewertung des Zustandes des linken Regenerators herangezogen werden. Vorliegend ist festzustellen, dass eine Unsymmetrie trotz des zweiten Regelkreises II existiert. D.h. während des positiven Regelwerts der Zeitspanne $+\Delta t$ musste offensichtlich die Periodendauer der Befeuerung mit dem linken Regenerators 50 zur Befeuerung des Oberofens 1 regelmäßig verlängert werden - man kann daraus auf einen unkontrollierten Lufteinbruch im Ofenraum 1 oder im Regenerator 50 schließen. Dies kann durch eine Druckanpassung im Ofenraum 10 ausgeregelt werden gemäß des oben erläuterten zweiten Teils II der Regelschleife des $\lambda$-Regelmoduls 200.

Zur praktischen Realisierung der Falschluftkompensation durch Anpassung der Verbrennungsluftmenge dagegen wird der Sollwert der Verbrennungsluftmenge bestimmt aus:

$$SP\_Luft = SP\_Lambda * L_{MIN} * Brennstoff - XFA.$$

wobei

SP_Luft       der Sollwert für die Verbrennungsluftmenge
SP_Lambda       der Vorgabewert für den gewünschten Luftüberschuss
$L_{MIN}$       die stöchiometrische Mindestluftmenge dieses Brennstoffs
Brennstoff       Maximum aus Sollwert und Istwert der Brennstoffmenge
XFA       die aktiv zu kompensierende Menge unkontrollierter Luft

Dazu hat es sich als zweckmäßig erwiesen, dass aus der Beobachtung und mathematischen Analyse des zeitlichen Trends der Menge unkontrollierter Luft während der Zeit einer Feuerperiode der regenerativen Beheizung charakteristische und periodisch wiederkehrende Trendmuster ermittelt werden, die zur Glättung der laufenden Prozesswerte unkontrollierter Luft und zur vorausschauenden Regelung verwendet werden.

Als aktiv zu kompensierende unkontrollierte Luftmenge ist also nicht ihr aktueller Wert XF zu verwenden, vielmehr ein aus der Analyse zurückliegender Perioden ermittelter geglätteter Wert XFA, der im einfachsten Falle durch ein gewichtetes Mittel aus einem linearen Verlauf über die Feuerperiode und dem aktuellen Prozesswert XF.

**Patentansprüche**

1. Verfahren zum geregelten Betrieb eines regenerativ beheizten Industrieofens (100) mit einem Ofenraum (10), insbesondere mit einer Schmelzwanne für Glas, aufweisend die Schritte:

- Injizieren von Brennstoff in den Ofenraum (10) über wenigstens einen Brennstoff-Injektor (20, 20'), der zur Injektion von Brennstoff praktisch ohne Verbrennungsluft ausgebildet ist,
- mittels einem dem wenigstens einen Brennstoff-Injektor (20, 20') zugeordneten linken Regenerator (50) periodisch abwechselnde Führung von einerseits Verbrennungsluft (VB) zum Ofenraum (10) in einer ersten Periodendauer und andererseits Abgas (AG) aus dem Ofenraum (10) in einer zweiten Periodendauer separat vom Brennstoff, und
- mittels einem dem wenigstens einen Brennstoff-Injektor (20, 20') zugeordneten rechten Regenerator (50') periodisch abwechselnde Führung von einerseits Abgas (AG) aus dem Ofenraum (10) in der ersten Periodendauer und andererseits Verbrennungsluft (VB) zum Ofenraum (10) in der zweiten Periodendauer, wobei
- der linke Regenerator (50) und der rechte Regenerator (50') zur regenerativen Speicherung von Wärme aus dem Abgas und Übertragung von Wärme auf die Verbrennungsluft ausgebildet sind, wobei
- eine Zufuhr der Verbrennungsluft mittels einer Regelschleife automatisch geregelt wird, und
- mittels eines Abgasanalysegeräts, nämlich einer Lambda-Sonde als Messglied im linken und rechten Regenerator ein Sauerstoffgehalt zur direkten Ermittlung einer Luftüberschusszahl ($\lambda$) des Abgases gemessen wird
- die Luftüberschusszahl ($\lambda$) als Prozesswert aus dem gemessenen Sauerstoffgehalt direkt ermittelt wird,

**dadurch gekennzeichnet, dass**

- der Prozesswert der Luftüberschusszahl einem $\lambda$-Regler ($P_{\lambda}$) der Regelschleife als Istwert ($\lambda_{IST}$) gegenüber

einem Sollwert ($\lambda_{SOLL}$) der Luftüberschusszahl zum Abgleich einer aus Istwert ($\lambda_{IST}$) und Sollwert ($\lambda_{SOLL}$) gebildeten Regelabweichung ($\Delta\lambda$) zur Verfügung gestellt wird, wobei,

- aus dem Prozesswert der Luftüberschusszahl ($\lambda$) ein Auftreten von Falschluft (XFA) ermittelt wird, indem
- die Luftüberschusszahl ($\lambda$) im wesentlichen das Verhältnis aus gemessen verfügbarer Luft in Form von geregelter Verbrennungsluft plus Falschluft (XFA) einerseits geteilt durch andererseits den Mindest-Luftbedarf ($L_{MIN}$) für die aktuelle Brennstoffmenge (Brennstoff) definiert, wobei
- in einer Verbrennungsrechnung die Falschluft (XFA) als Menge aller Störungen einer Verbrennungsluft-Bilanz als Störgröße der Regelschleife ermittelt wird aus einer Differenz zwischen der gemessen verfügbaren Luft minus der geregelten Verbrennungsluft,
- auftretende Falschluft im Rahmen einer Falschluftindikation angezeigt wird, wobei

angezeigt wird, ob eine Falschluft in einem ersten Fall stromaufwärts im oder vor dem luftseitigen linken und/oder rechten Regenerator auftritt oder

ob eine Falschluft in einem zweiten Fall stromabwärts nach dem luftseitigen linken oder rechten Regenerator in dem Ofenraum auftritt, und wobei

in einem ersten Teil der Regelschleife für den ersten Fall gemäß Ausgang des $\lambda$-Reglers mittels einem ersten Stellglied die Zufuhr von Verbrennungsluft zum Ofenraum als Stellgröße eingestellt wird, und

in einem zweiten Teil der Regelschleife für den zweiten Fall gemäß Ausgang des $\lambda$-Reglers mittels einem zweiten Stellglied ein Ofendruck im Ofenraum als Stellgröße eingestellt wird.

2. Verfahren nach Anspruch 1 **dadurch gekennzeichnet, dass** mittels dem zweiten Stellglied der Ofendruck derart eingestellt wird, dass eine Falschluft unterdrückt und für einen verbleibenden Anteil von Falschluft eine Herkunft der Falschluft im Rahmen der Falschluftindikation angezeigt wird, um Regelgrenzen der Regelschleife zu bestimmen.

3. Verfahren nach Anspruch 2 **dadurch gekennzeichnet, dass** ein Ofendruck gemessen wird, wobei geprüft wird ob, unterhalb eines Mindestwertes des Ofendrucks als Stabilitätsgrenze, eine Minderung der Menge an geregelter Verbrennungsluft eine Erhöhung einer Menge der Falschluft (XFA) nach sich zieht.

4. Verfahren nach einem der vorhergehenden Ansprüche, **dadurch gekennzeichnet, dass** das erste Stellglied als ein Drosselmittel in der Verbrennungsluftzuführung gebildet ist, das zur Regelung einer Flussmenge der Verbrennungsluft ausgebildet ist und/oder das zweite Stellglied als ein Schieber in der Abgasabführung gebildet ist, das zum Aufbau eines Gegendrucks zum Ofendruck ausgebildet ist.

5. Verfahren nach Anspruch 1 **dadurch gekennzeichnet, dass** die Zufuhr von Verbrennungsluft (SP_Luft) durch einen PID-Regler automatisch geregelt wird, dessen Sollwert gebildet wird aus dem Produkt der Brennstoffmenge (Brennstoff), dem stöchiometrischen Luftbedarf ($L_{MIN}$) des Brennstoffs und des als Zielgröße (SP_Lambda) vorgegebenen Sollwertes ($\lambda_{SOLL}$) der Luftüberschusszahl ($\lambda$) abzüglich einer laufend ermittelten Menge an Falschluft (XFA) von außerhalb des Industrieofens gemäß der Regel SP_Luft = SP_Lambda * $L_{MIN}$ * Brennstoff - XFA.

6. Verfahren nach Anspruch 5 **dadurch gekennzeichnet, dass** die Falschluft (XFA) laufend mittels der Verbrennungsrechnung auf Grundlage des kontinuierlich arbeitenden Abgasanalysegeräts ermittelt wird, wobei ein als Zielgröße vorgegebener Sollwert der Luftüberschusszahl ($\lambda$) der Verbrennungsluft (SP_Luft) durch die Brennstoffmenge (Brennstoff) geteilt ein laufend korrigiertes Luft-Brennstoff-Verhältnis (SP_Luft/Brennstoff) bildet, das dem $\lambda$-Regler der Regelschleife zugeführt wirdnämlich ein Luft-Brennstoff-Verhältnis gemäß der Regel SP_Luft/ Brennstoff = SP_Lambda * $L_{MIN}$ - XFA/ Brennstoff.

7. Verfahren nach einem der Ansprüche 1 bis 6 **dadurch gekennzeichnet, dass** in einer Temperaturregelung:

- über eine Ofenraumtemperatur als Regelgröße, und
- einen ersten Regler für die Ofenraumtemperatur, sowie
- über ein dem ersten Regler zugeordnetes Stellglied eine erste stellbare Stellgröße in Form eines Brennstoffstroms und/oder eines Verbrennungsluftstroms eingestellt wird.

8. Verfahren nach einem der Ansprüche 1 bis 7 **dadurch gekennzeichnet, dass** in einer zweiten Regelschleife für eine Symmetrieregelung betreffend den linken und rechten Regenerator:

- über eine für den Wärmeinhalt der Verbrennungsluft des ersten Regenerators signifikante erste Vorwärmekenngröße und eine für den Wärmeinhalt der Verbrennungsluft des zweiten Regenerators signifikante zweite Vorwärmekenngröße, und

- einem zweiten Regler für den Unterschied der ersten und zweiten Vorwärmekenngröße, sowie
- über ein dem zweiten Regler zugeordnetes Stellglied eine zweite stellbare Stellgröße in Form einer den Wärmeübertrag zwischen dem ersten und zweiten Regenerator beeinflussenden Wärmeübertragungsgröße eingestellt wird.

**9.** Verfahren nach Anspruch 8 **dadurch gekennzeichnet, dass** die zweite stellbare Stellgröße in Form einer den Wärmeübertrag zwischen dem ersten und zweiten Regenerator beeinflussenden Wärmeübertragungsgröße eingestellt wird, um den Betrag eines Unterschieds zwischen der ersten und zweiten Vorwärmekenngröße auf einen Wert unterhalb eines Schwellwerts nahe Null zu beschränken.

**10.** Verfahren nach Anspruch 8 oder 9 **dadurch gekennzeichnet, dass**

- als Wärmeübertragungsgröße eine erste Zeitspanne eingestellt wird, um welche für den heißeren des ersten und zweiten Regenerators die erste Periodendauer verlängert oder für den kälteren des ersten und zweiten Regenerators die erste Periodendauer verkürzt wird oder
- als Wärmeübertragungsgröße eine zweite Zeitspanne eingestellt wird, um welche für den kälteren des ersten und zweiten Regenerators die zweite Periodendauer verlängert oder für den heißeren des ersten und zweiten Regenerators die zweite Periodendauer verkürzt wird, wobei
- die erste und zweite Zeitspanne gleichen Betrags sind.

**11.** Verfahren nach einem der Ansprüche 8 bis 10 **dadurch gekennzeichnet, dass** der Unterschied zwischen der ersten und zweiten Vorwärmekenngröße als Regelergebnis der zweiten Regelschleife im Rahmen der Falschluftindikation zur Bewertung eines unkontrollierten Lufteinbruchs im Ofenraum und/oder Regenerator verwendet wird, insbesondere zur weiteren Bewertung des Zustandes des Regenerators und/oder zur Bewertung einer weiteren Einflussgröße verwendet wird.

**12.** Verfahren nach einem der Ansprüche 1 bis 11 **dadurch gekennzeichnet, dass** im Rahmen der Falschluftindikation angezeigt wird, dass Falschluft stromabwärts nach dem luftseitigen linken und/oder rechten Regenerator in dem Ofenraum zutritt, für den Fall, dass auf einer die Periodendauer mehrfach übersteigenden Zeitskala im Mittel eine Erwärmung des Regenerators vorliegt.

**13.** Verfahren nach einem der Ansprüche 1 bis 12 **dadurch gekennzeichnet, dass** für mehrere simultan eingesetzte Brennstoffe entsprechende Luftverhältnisse derart gebildet werden, dass diese zueinander im Verhältnis des stöchiometrischen Luftbedarfes der jeweiligen Brennstoffe stehen.

**14.** Verfahren nach einem der Ansprüche 1 bis 13 **dadurch gekennzeichnet, dass** im Rahmen der Falschluftindikation aus der Beobachtung und/oder Analyse des zeitlichen Trends der Menge der Falschluft (XFA) während der Zeit einer Feuerperiode der regenerativen Beheizung charakteristische und periodisch wiederkehrende Trendmuster ermittelt werden und zur Glättung von laufenden Prozesswerten unkontrollierter Falschluft (XFA) und/oder zur vorausschauenden Regelung der Verbrennungsluft verwendet werden.

**15.** Verfahren nach einem der Ansprüche 1 bis 14 **dadurch gekennzeichnet, dass** ein Mindestwert des Ofendrucks als Stabilitätsgrenze eingehalten wird, wobei bei Unterschreitung der Stabilitätsgrenze eine Senkung des Verbrennungsluftstroms zu höherer Ansaugung von Falschluft (XFA) führt, während für Ofendruckwerte oberhalb der Stabilitätsgrenze die Falschluft nicht oder nur unwesentlich durch unterschiedlich hohen Verbrennungsluftstrom beeinflusst wird.

**16.** Verfahren nach einem der Ansprüche 1 bis 15 **dadurch gekennzeichnet, dass** eine Mindestmenge des geregelten Verbrennungsluftstroms derart begrenzt wird, dass eine Temperatur eines periodisch luftseitigen Regenerators unterhalb eines vorgegebenen Temperaturschwellwertes bleibt.

**17.** Regeleinrichtung zur Ausführung eines Verfahrens nach einem der Ansprüche 1 bis 16 einer Industrieofen-Regelung bei einem Industrieofen (100) aufweisend:

den $\lambda$-Regler mit einem Eingang für eine Luftüberschusszahl als Istwert ($\lambda_{IST}$) gegenüber einem Sollwert ($\lambda_{SOLL}$) der Luftüberschusszahl zum Abgleich einer aus Istwert ($\lambda_{IST}$) und Sollwert ($\lambda_{SOLL}$) gebildeten Regelabweichung ($\Delta\lambda$), welche Luftüberschusszahl mittels eines Abgasanalysegeräts, nämlich einer Lambda-Sonde, als Messglied im linken und rechten Regenerator über einen Sauerstoffgehalt zur direkten Ermittlung der Luftüberschusszahl ($\lambda$) des Abgases messbar ist, wobei die Luftüberschusszahl ($\lambda$) als Prozesswert direkt aus den gemessenen Sauerstoffgehalt ermittelbar ist, wobei

- aus dem Prozesswert der Luftüberschusszahl ($\lambda$) ein Auftreten von Falschluft ermittelt wird, indem
- die Luftüberschusszahl ($\lambda$) im wesentlichen das Verhältnis aus gemessen verfügbarer Luft in Form von geregelter Verbrennungsluft plus Falschluft (XFA) einerseits geteilt durch andererseits den Mindest-Luftbedarf ($L_{MIN}$) für die aktuelle Brennstoffmenge (Brennstoff) definiert, wobei
- in einer Verbrennungsrechnung die Falschluft (XFA) als Menge aller Störungen einer Verbrennungsluft-Bilanz als Störgröße der Regelschleife ermittelt wird aus einer Differenz zwischen der gemessen verfügbaren Luft minus der geregelten Verbrennungsluft, und
- auftretende Falschluft im Rahmen einer Falschluftindikation angezeigt wird, wobei die Regeleinrichtung weiter aufweist
- ein Falschluftindikationsmodul, mittels dem angezeigt wird,
ob eine Falschluft in einem ersten Fall stromaufwärts im oder vor dem luftseitigen linken oder rechten Regenerator auftritt oder ob eine Falschluft in einem zweiten Fall stromabwärts nach dem luftseitigen linken oder rechten Regenerator in dem Ofenraum auftritt, und
- ein Verzweigungsmodul, das ausgebildet ist, zu veranlassen, dass
in einem ersten Teil einer Regelschleife für den ersten Fall gemäß Ausgang eines $\lambda$-Reglers mittels einem ersten Stellglied eine Zufuhr von Verbrennungsluft zum Ofenraum als erste Stellgröße eingestellt wird, und

in einem zweiten Teil der Regelschleife für den zweiten Fall gemäß Ausgang des $\lambda$-Reglers mittels einem zweiten Stellglied ein Ofendruck im Ofenraum als zweite Stellgröße eingestellt wird.

**18.** Regeleinrichtung nach Anspruch 17 weiter ausweisend:

ein Temperaturregelmodul für eine erste Regelschleife mittels dem:

- über eine Ofenraumtemperatur als Regelgröße, und
- einen ersten Regler für die Ofenraumtemperatur, sowie
- über ein dem ersten Regler zugeordnetes Stellglied, eine erste stellbare Stellgröße in Form eines Brennstoffstroms und/oder eines Verbrennungsluftstroms einstellbar ist, und

ein Symmetrieregelmodul betreffend den linken und rechten Regenerator für eine zweite Regelschleife mittels dem:

- über eine für den Wärmeinhalt der Verbrennungsluft des ersten Regenerators signifikante erste Vorwärmekenngröße und eine für den Wärmeinhalt der Verbrennungsluft des zweiten Regenerators signifikante zweite Vorwärmekenngröße, und
- einem zweiten Regler für den Unterschied der ersten und zweiten Vorwärmekenngröße, sowie
- über ein dem zweiten Regler zugeordnetes Stellglied, eine zweite stellbare Stellgröße in Form einer den Wärmeübertrag zwischen dem ersten und zweiten Regenerator beeinflussenden Wärmeübertragungsgröße einstellbar ist.

**19.** Regenerativ beheizter Industrieofen mit einem Ofenraum, insbesondere mit einer Schmelzwanne, insbesondere für Glas, weiter aufweisend:

- wenigstens einen Brennstoff-Injektor zum injizieren von Brennstoff in den Ofenraum, der zur Injektion von Brennstoff, insbesondere praktisch ohne Verbrennungsluft, ausgebildet ist,
- einen dem wenigstens einen Brennstoff-Injektor zugeordneten linken Regenerator und rechten Regenerator, die zur regenerativen Speicherung von Wärme aus dem Abgas und Übertragung von Wärme auf die Verbrennungsluft ausgebildet sind zur periodisch abwechselnden Führung von einerseits Verbrennungsluft zum Ofenraum in einer ersten Periodendauer und andererseits Abgas aus dem Ofenraum in einer zweiten Periodendauer separat vom Brennstoff, und
- eine Regeleinrichtung nach Anspruch 17 oder 18.

**Claims**

1. **Method** for the controlled operation of an industrial oven (100) which is heated in a regenerative manner, having an oven space (10), in particular having a melting bath for glass, having the steps:

   - injecting fuel into the oven space (10) via at least one fuel injector (20, 20'), which is designed for the injection of fuel practically without combustion air,
   - by means of a left-hand regenerator (50) assigned to the at least one fuel injector (20, 20'), a periodically alternating guiding of on the one hand combustion air (VB) to the oven space (10) in a first period duration and on the other hand exhaust gas (AG) out of the oven space (10) in a second period duration separately from the fuel, and
   - by means of a right-hand regenerator (50') assigned to the at least one fuel injector (20, 20'), a periodically alternating guiding of on the one hand exhaust gas (AG) out of the oven space (10) in the first period duration and on the other hand combustion air (VB) to the oven space (10) in the second period duration, wherein
   - the left-hand regenerator (50) and the right-hand regenerator (50') are designed for the regenerative storing of heat from the exhaust gas and transmission of heat to the combustion air, wherein
   - a supply of the combustion air is automatically controlled by means of a control loop, and
   - by means of an exhaust gas analysis device, specifically a lambda sensor as a measuring component in the left-hand and right-hand regenerator, an oxygen content is measured for the direct determination of an excess air ratio ($\lambda$) of the exhaust gas
   - the excess air ratio ($\lambda$) is directly determined as a process value from the measured oxygen content,

   **characterised in that**

   - the process value of the excess air ratio is made available to a $\lambda$-regulator ($R_\lambda$) of the control loop as an actual value ($\lambda_{IST}$) with respect to a target value ($\lambda_{SOLL}$) of the excess air ratio for the comparison of a control deviation ($\Delta\lambda$) formed from actual value ($\lambda_{IST}$) and target value ($\lambda_{SOLL}$), wherein,
   - from the process value of the excess air ratio ($\lambda$), an occurrence of infiltrated air (XFA) is detected, **in that**
   - the excess air ratio ($\lambda$) defines substantially the ratio of measured available air in the form of controlled combustion air plus infiltrated air (XFA) on the one hand divided by on the other hand the minimum air requirement ($L_{MIN}$) for the actual fuel quantity (Brennstoff), wherein
   - in a combustion calculation the infiltrated air (XFA) as a quantity of all disturbances of a combustion air balance is detected as a disturbance variable of the control loop from a difference between the measured available air minus the controlled combustion air,
   - occurring infiltrated air is displayed in the context of an infiltrated air indication,

   wherein
   it is displayed whether infiltrated air occurs in a first case upstream in or prior to the air-side left-hand and/or right-hand regenerator or
   whether infiltrated air occurs in a second case downstream after the air-side left-hand or right-hand regenerator in the oven space, and wherein
   in a first part of the control loop for the first case according to output of the $\lambda$-regulator, by means of a first actuator the supply of combustion air to the oven space is set as actuating variable, and
   in a second part of the control loop for the second case according to output of the $\lambda$-regulator, by means of a second actuator an oven pressure in the oven space is set as actuating variable.

2. Method according to claim 1, **characterised in that** by means of the second actuator the oven pressure is set such that infiltrated air is suppressed and for a remaining proportion of infiltrated air a point of origin of the infiltrated air is shown in the context of the infiltrated air indication, in order to determine control limits of the control loop.

3. Method according to claim 2, **characterised in that** an oven pressure is measured, wherein it is checked whether, below a minimum value of the oven pressure as stability limit, a reduction in the quantity of controlled combustion air entails an increase in a quantity of infiltrated air (XFA).

4. Method according to any of the preceding claims, **characterised in that** a first actuator is designed as a throttle agent in the combustion air supply, which is configured for the regulation of a flow quantity of the combustion air and/or the second actuator is designed as a gate valve in the exhaust gas evacuation, which is configured for the formation of a counter pressure to the oven pressure.

**5.** Method according to claim 1, **characterised in that** the supply of combustion air (SP_Luft) is automatically regulated by a PID-controller, the target value of which is formed from the product of the fuel quantity (Brennstoff), the stoichiometric air requirement ($L_{MIN}$) of the fuel and the target value ($\lambda_{SOLL}$) predetermined as target parameter (SP_Lambda) of the excess air ratio ($\lambda$) minus a continuously detected quantity of infiltrated air (XFA) from outside the industrial oven according to the rule SP_Luft = SP_Lambda * $L_{MIN}$ * Brennstoff - XFA.

**6.** Method according to claim 5, **characterised in that** the infiltrated air (XFA) is constantly determined by means of the combustion calculation on the basis of the continuously working exhaust gas analysis device, wherein a target variable, predetermined as a target parameter, of the excess air ratio ($\lambda$) of the combustion air (SP_Luft) divided by the fuel quantity (Brennstoff) forms a continuously corrected air-fuel-ratio (SP_Luft/Brennstoff), which is supplied to the $\lambda$-regulator of the control loop specifically an air-fuel-ratio according to the rule SP_Luft/Brennstoff = SP_Lambda * $L_{MIN}$ -XFA/Brennstoff.

**7.** Method according to any of claims 1 to 6, **characterised in that** in a temperature regulation:

- by means of an oven space temperature as regulating variable, and
- a first regulator for the oven space temperature, and
- by means of an actuator assigned to the first regulator, a first adjustable actuating variable is set in the form of a fuel flow and/or a combustion air flow.

**8.** Method according to any of claims 1 to 7, **characterised in that** in a second control loop for a symmetry regulation with respect to the left-hand and right-hand regenerators:

- by means of a first preheat parameter significant for the heat content of the combustion air of the first regenerator and a second preheat parameter significant for the heat content of the combustion air of the second regenerator, and
- a second regulator for the difference between the first and second preheat parameters, and
- by means of an actuator assigned to the second regulator a second adjustable actuating variable is set in the form of a heat transfer variable influencing the heat transfer between the first and second regenerators.

**9.** Method according to claim 8, **characterised in that** the second adjustable actuating variable is set in the form of a heat transfer variable influencing the heat transfer between the first and second regenerators, in order to limit the magnitude of a difference between the first and second preheat parameter to a value below a threshold value near to zero.

**10.** Method according to claim 8 or 9, **characterised in that**

- as heat transfer variable a first time interval is set by which for the warmer of the first and second regenerators the first period duration is extended or for the colder of the first and second regenerators the first period duration is shortened or
- as heat transfer variable a second time interval is set by which for the colder of the first and second regenerators the second period duration is extended or for the warmer of the first and second regenerators the second period duration is shortened, wherein
- the first and second time interval are of equal magnitude.

**11.** Method according to any of claims 8 to 10, **characterised in that** the difference between the first and second preheat parameters is used as regulating result of the second control loop in the context of the infiltrated air indication for the evaluation of an uncontrolled air ingress in the oven space and/or regenerator, in particular for the further evaluation of the status of the regenerator and/or for the evaluation of a further influencing parameter.

**12.** Method according to any of claims 1 to 11, **characterised in that** in the context of the infiltrated air indication it is displayed that infiltrated air enters into the oven space downstream after the air-side left-hand and/or right-hand regenerator, for the case that on a time scale that exceeds the period duration several times, there is on average a heating of the regenerator.

**13.** Method according to any of claims 1 to 12, **characterised in that** for several simultaneously employed fuels corresponding air conditions are formed such that they are in a proportion to one another of the stoichiometric air requirement of the respective fuels.

14. Method according to any of claims 1 to 13, **characterised in that** in the context of the infiltrated air indication from the observation and/or analysis of the chronological trend of the quantity of the infiltrated air (XFA) during the time of a firing period of the regenerative heating, characteristic and periodically reoccurring trend patterns are detected and are used for smoothing continuous process values of uncontrolled infiltrated air (XFA) and/or for the forward-looking controlling of the combustion air.

15. Method according to any of claims 1 to 14, **characterised in that** a minimum value of the oven pressure is maintained as stability limit, wherein when the stability limit is undershot a reduction in the combustion air flow leads to higher evacuation of infiltrated air (XFA), while for oven pressure values above the stability limit the infiltrated air is not or only insignificantly influenced by different levels of combustion air flow.

16. Method according to any of claims 1 to 15, **characterised in that** a minimum quantity of the regulated combustion air flow is limited such that a temperature of a periodically air-side regenerator remains below a predetermined temperature threshold value.

17. Regulating device for carrying out a method according to any of claims 1 to 16 of an industrial oven regulation in the case of an industrial oven (100) having:
the $\lambda$-regulator having one input for an excess air ratio as actual value ($\lambda_{IST}$) versus a target value ($\lambda_{SOLL}$) of the excess air ratio for comparing a control deviation ($\Delta\lambda$) formed from actual value ($\lambda_{IST}$) and target value ($\lambda_{SOLL}$), which excess air ratio can be measured by means of an exhaust gas analysis device, specifically a lambda sensor, as a measuring component in the left-hand and right-hand regenerators by means of an oxygen content for the direct determination of the excess air ratio ($\lambda$) of the exhaust gas, wherein the excess air ratio ($\lambda$) as process value can be determined directly from the measured oxygen content, wherein

    - from the process value of the excess air ratio ($\lambda$) an occurrence of infiltrated air is determined, in that
    - the excess air ratio ($\lambda$) substantially defines the ratio of measured available air in the form of regulated combustion air plus infiltrated air (XFA) on the one hand divided by on the other hand the minimum air requirement ($L_{MIN}$) for the actual quantity of fuel (Brennstoff), wherein
    - in a combustion calculation the infiltrated air (XFA) is detected as a quantity of all disturbances of a combustion air balance as a disturbance variable of the control loop from a difference between the measured available air minus the controlled combustion air, and
    - occurring infiltrated air is displayed in the context of an infiltrated air indication, wherein the regulating device further has
    - an infiltrated air indication module by means of which is displayed,
whether infiltrated air in a first case occurs upstream in or prior to the air-side left-hand or right-hand regenerator or whether infiltrated air in a second case occurs downstream after the air-side left-hand or right-hand regenerator in the oven space, and
    - a branch module, which is configured to permit that

        in a first part of a control loop for the first case according to output of a $\lambda$-regulator by means of a first actuator a supply of combustion air to the oven space is set as first actuating variable, and
        in a second part of the control loop for the second case according to output of the $\lambda$-regulator by means of a second actuator an oven pressure in the oven space is set as second actuating variable.

18. Regulating device according to claim 17, further having:
a temperature regulating module for a first control loop by means of which:

    - by means of an oven space temperature as regulating variable, and
    - a first regulator for the oven temperature, and
    - via an actuator assigned to the first regulator, a first adjustable actuating variable in the form of a fuel flow and/or a combustion air flow can be set, and

a symmetry regulation module concerning the left-hand and right-hand regenerator for a second control group by means of which:

    - by means of a first preheat parameter significant for the heat content of the combustion air of the first regenerator and a second preheat parameter significant for the heat content of the combustion air of the second regenerator, and

EP 2 619 150 B1

- a second regulator for the difference between the first and second preheat parameters, and
- by means of an actuator assigned to the second regulator, a second adjustable actuating variable in the form of a heat transfer parameter influencing the heat transfer between the first and second regenerators can be set.

**19.** Regeneratively heated industrial oven with an oven space, in particular having a melting bath, in particular for glass, further having:

- at least one fuel injector for injecting fuel into the oven space which is designed for the injection of fuel, in particular practically without combustion air,
- a left-hand regenerator and right-hand regenerator assigned to the at least one fuel injector, which are configured for the regenerative storage of heat from the exhaust gas and transmission of heat to the combustion air for the periodically alternating guiding of on the one hand combustion air to the oven space in a first period duration and on the other hand exhaust gas out of the oven space in a second period duration separately from the fuel, and
- a regulating device according to claim 17 or 18.

**Revendications**

1. Procédé pour le fonctionnement régulé d'un four industriel (100) chauffé de manière régénérative, avec une chambre de four (10), plus particulièrement avec un bac de fusion pour le verre, comprenant les étapes suivantes :

- injection de carburant dans la chambre de four (10) par l'intermédiaire d'au moins un injecteur de carburant (20, 20') qui est conçu pour l'injection de carburant pratiquement sans air de combustion,
- au moyen d'un régénérateur gauche (50), correspondant à l'au moins un injecteur de carburant (20, 20'), guidage périodiquement alterné, d'une part, d'air de combustion (VB) vers la chambre de four (10) lors d'une première période et d'autre part de gaz d'échappement (AG) hors de la chambre de four (10) lors d'une deuxième période séparément du carburant, et
- au moyen d'un régénérateur droit (50'), correspondant à l'au moins un injecteur de carburant (20, 20'), guidage périodiquement alterné, d'une part de gaz d'échappement (AG) hors de la chambre de four (10) lors de la première période et d'autre part d'air de combustion (VB) vers la chambre de four (10) lors de la deuxième période,
- le régénérateur gauche (50) et le régénérateur droit (50') étant conçus pour l'accumulation régénérative de chaleur provenant du gaz d'échappement et la transmission de chaleur à l'air de combustion,
- une introduction de l'air de combustion étant régulée automatiquement au moyen d'une boucle de régulation et
- au moyen d'un appareil d'analyse de gaz d'échappement, à savoir une sonde lambda, en tant qu'organe de mesure, dans les régénérateurs gauche et droit, une teneur en oxygène étant mesurée pour la détermination directe d'un coefficient d'excès d'air ($\lambda$)
- le coefficient d'excès d'air ($\lambda$) étant déterminé, en tant que valeur de process, directement à partir de la teneur en oxygène mesurée,

**caractérisé en ce que**

- la valeur de process du coefficient d'excès d'air est mise à disposition d'un régulateur $\lambda$ ($R_\lambda$) de la boucle de régulation en tant que valeur réelle ($\lambda_{IST}$) par rapport à une valeur de consigne ($\lambda_{SOLL}$) du coefficient d'excès d'air pour le calcul d'un écart de régulation ($\Delta\lambda$) généré à partir de la valeur réelle ($\lambda_{IST}$) et de la valeur de consigne ($\lambda_{SOLL}$),
- l'apparition d'un air parasite (XFA) étant déterminé à partir de la valeur de process du coefficient d'excès d'air ($\lambda$), grâce au fait que
- le coefficient d'excès d'air ($\lambda$) définit globalement le rapport entre l'air disponible mesuré sous la forme d'air de combustion plus l'air parasite (XFA) d'une part, divisé d'autre part par les besoins minimums en air ($L_{MIN}$) pour la quantité de carburant actuelle (carburant),
- dans un calcul de combustion, l'air parasite (XFA) étant déterminé comme la quantité de toutes les perturbations d'un bilan d'air de combustion en tant que grandeur parasite de la boucle de régulation, à partir d'une différence entre l'air disponible mesuré moins l'air de combustion régulé,
- l'air parasite apparaissant étant affiché dans le cadre d'une indication d'air parasite,

moyennant quoi il est affiché si un air parasite, dans un premier cas, apparaît en amont dans ou avant le régénérateur gauche et/ou droit du côté de l'air ou

si un air parasite apparaît, dans un deuxième cas, en aval après le régénérateur gauche ou droit du côté de l'air dans la chambre du four et

dans une première partie de la boucle de régulation, pour le premier cas, l'introduction d'air de combustion dans la chambre du four est réglée en tant que grandeur de réglage selon la sortie du régulateur λ, au moyen d'un premier organe de réglage et

dans une deuxième partie de la boucle de régulation, pour le deuxième cas, une pression de four dans la chambre du four est réglée en tant que grandeur de réglage selon la sortie du régulateur λ, au moyen d'un deuxième organe de réglage.

2. Procédé selon la revendication 1, **caractérisé en ce que**, au moyen du deuxième organe de réglage, la pression du four est réglée de façon à ce qu'un air parasite est inhibé et, pour une partie restante d'air parasite, une origine de l'air parasite est affichée dans le cadre de l'indication d'air parasite, afin de déterminer les limites de régulation de la boucle de régulation.

3. Procédé selon la revendication 2, **caractérisé en ce qu'**une pression de four est mesurée, moyennant quoi il est vérifié si, en dessous d'une valeur minimale de la pression de four, en tant que limite de stabilité, une réduction de la quantité d'air de combustion régulé provoque une augmentation de l'air parasite (XFA).

4. Procédé selon l'une des revendications précédentes, **caractérisé en ce que** le premier organe de réglage est conçu comme un moyen d'étranglement dans l'alimentation en air de combustion, qui est conçu pour la régulation d'un débit de l'air de combustion et/ou le deuxième organe de réglage est conçu comme un coulisseau dans le guidage de gaz d'échappement, qui est conçu pour l'augmentation d'une contre-pression par rapport à la pression du four.

5. Procédé selon la revendication 1, **caractérisé en ce que** l'introduction d'air de combustion (SP_Luft) est régulée automatiquement par un régulateur PID, dont la valeur de consigne est formée du produit de la quantité de carburant (carburant), des besoins en air stoechiométriques ($L_{MIN}$) du carburant et de la valeur de consigne ($λ_{SOLL}$), prédéterminée en tant que grandeur cible (SP_Lambda), du coefficient d'excès d'air (λ) moins une quantité, déterminée en continu, d'air parasite (XFA), de l'extérieur du four industriel selon la règle : SP Luft = SP_Lambda * $L_{MIN}$ * Carburant - XFA.

6. Procédé selon la revendication 5, **caractérisé en ce que** l'air parasite (XFA) est déterminé en continu au moyen du calcul de combustion sur la base de l'appareil d'analyse des gaz d'échappement fonctionnant en continu, une valeur de consigne, prédéterminée, en tant que grandeur cible, du coefficient d'excès d'air (λ) de l'air de combustion (SP_Luft), divisée par la quantité de carburant (carburant), formant un rapport air-carburant (SP_Luft/Carburant) corrigé en continu, qui est introduit dans le régulateur λ de la boucle de régulation, à savoir un rapport air-carburant selon la règle : SP_Luft/Carburant = SP_Lambda * $L_{MIN}$ * XFA/Carburant.

7. Procédé selon l'une des revendications 1 à 6, **caractérisé en ce que**, dans une régulation de température :

   - par l'intermédiaire d'une température de chambre du four en tant que grandeur de régulation et
   - par l'intermédiaire d'un premier régulateur pour la température de chambre du four ainsi que
   - par l'intermédiaire d'un organe de réglage correspondant au premier régulateur, une première grandeur de réglage réglable est réglée sous la forme d'un débit de carburant et/ou d'un débit d'air de combustion.

8. Procédé selon l'une des revendications 1 à 7, **caractérisé en ce que**, dans une deuxième boucle de régulation, pour une régulation symétrique concernant les régénérateurs gauche et droit :

   - par l'intermédiaire d'une première grandeur caractéristique de préchauffage significative pour l'enthalpie de l'air de combustion du premier régénérateur et d'une deuxième grandeur caractéristique de préchauffage significative pour l'enthalpie de l'air de combustion du deuxième régénérateur et
   - par l'intermédiaire d'un deuxième régulateur pour la différence entre les première et deuxième grandeurs caractéristiques de préchauffage ainsi que
   - par l'intermédiaire d'un organe de réglage correspondant au deuxième régulateur, une deuxième grandeur de réglage réglable est réglée sous la forme d'une grandeur de transmission de chaleur influençant la transmission de chaleur entre les premier et deuxième régénérateurs

9. Procédé selon la revendication 8, **caractérisé en ce que** la deuxième grandeur de réglage réglable est réglée sous la forme d'une grandeur de transmission de chaleur influençant la transmission de chaleur entre les premier et deuxième régénérateurs, afin de limiter la valeur d'une différence entre les premier et deuxième grandeurs caractéristiques de préchauffage, à une valeur en dessous d'une valeur seuil proche de zéro.

**10.** Procédé selon la revendication 8 ou 9, **caractérisé en ce que**

- en tant que grandeur de transmission de chaleur, un premier laps de temps est réglé, duquel, pour le plus chaud des premier et deuxième régénérateurs, la première période est rallongée ou, pour le plus froid des premier et deuxième régénérateurs, la première période est raccourcie ou
- en tant que grandeur de transmission de chaleur, un deuxième laps de temps est réglé, duquel, pour le plus froid des premier et deuxième régénérateurs, la deuxième période est rallongée ou, pour le plus chaud des premier et deuxième régénérateurs, la deuxième période est raccourcie,
- les premier et deuxième laps de temps étant identiques.

**11.** Procédé selon l'une des revendications 8 à 10, **caractérisé en ce que** la différence entre la première et la deuxième grandeur caractéristique de préchauffage est utilisée en tant que résultat de régulation de la deuxième boucle de régulation dans le cadre de l'indication d'air parasite pour l'évaluation d'une entrée d'air incontrôlée dans la chambre du four et/ou le régénérateur, plus particulièrement pour l'évaluation supplémentaire de l'état du régénérateur et/ou pour l'évaluation d'une grandeur d'influence supplémentaire.

**12.** Procédé selon l'une des revendications 1 à 11, **caractérisé en ce que**, dans le cadre de l'indication d'air parasite, il est affiché que l'air parasite entre en aval après le régénérateur gauche et/ou droit côté air dans la chambre du four, dans le cas où, sur une échelle de temps dépassant plusieurs fois la période, un chauffage du régénérateur se trouve au centre.

**13.** Procédé selon l'une des revendications 1 à 12, **caractérisé en ce que**, pour plusieurs carburant utilisés simultanément, des rapports d'air sont formés de façon à ce que ceux-ci soient entre eux en rapport avec les besoins en air stoechiométriques de chacun des carburants.

**14.** Procédé selon l'une des revendications 1 à 13, **caractérisé en ce que**, dans le cadre de l'indication d'air parasite, à partir de l'observation et/ou de l'analyse de la tendance temporelle de l'air parasite (XFA), pendant le temps d'une période de combustion du chauffage régénératif, des motifs de tendances caractéristiques et périodiquement répétitifs sont déterminés et sont utilisés pour le lissage de valeurs de process en continu de l'air parasite (XFA) incontrôlé et/ou pour la régulation prévisionnelle de l'air de combustion.

**15.** Procédé selon l'une des revendications 1 à 14, **caractérisé en ce qu'**une valeur minimale de la pression du four est respectée en tant que limite de stabilité, moyennant quoi, lors du passage en dessous de la limite de stabilité, une réduction du débit d'air de combustion provoque une aspiration plus importante d'air parasite (XFA), tandis que , pour les valeurs de la pression du four au-dessus de la limite de stabilité, l'air parasite n'est pas influencé ou seulement de manière négligeable par des débits d'air de combustion de différentes valeurs.

**16.** Procédé selon l'une des revendications 1 à 15, **caractérisé en ce qu'**une quantité minimale du débit d'air de combustion régulé est limitée de façon à ce qu'une température d'un régénérateur périodiquement côté air reste en dessous d'une valeur seuil de température prédéterminée.

**17.** Dispositif de régulation pour l'exécution d'un procédé selon l'une des revendications 1 à 16, d'une régulation de four industriel, dans un four industriel (100), comprenant
le régulateur $\lambda$ avec une entrée pour un coefficient d'excès d'air en tant que valeur réelle ($\lambda_{IST}$) par rapport à une valeur de consigne ($\lambda_{SOLL}$) du coefficient d'excès d'air pour le calcul d'un écart de régulation ($\Delta\lambda$) formé de la valeur réelle ($\lambda_{IST}$) et de la valeur de consigne ($\lambda_{SOLL}$), ce coefficient d'excès d'air pouvant être mesuré au moyen d'un appareil d'analyse de gaz d'échappement, à savoir une sonde Lambda, en tant qu'organe de mesure dans les régénérateurs gauche et droit, par l'intermédiaire d'une teneur en oxygène, pour la détermination directe du coefficient d'excès d'air ($\lambda$) du gaz d'échappement, le coefficient d'excès d'air ($\lambda$) pouvant être déterminé en tant que valeur de process directement à partir de la teneur en oxygène mesurée,

- une apparition d'air parasite étant déterminée à partir de la valeur de process du coefficient d'excès d'air ($\lambda$), grâce au fait que
- le coefficient d'excès d'air ($\lambda$) définit globalement le rapport entre l'air disponible mesuré sous la forme d'air de combustion plus l'air parasite (XFA) d'une part, divisé d'autre part par les besoins minimums en air ($L_{MIN}$) pour la quantité de carburant actuelle (carburant),

- dans un calcul de combustion, l'air parasite (XFA) étant déterminé comme la quantité de toutes les perturbations d'un bilan d'air de combustion en tant que grandeur parasite de la boucle de régulation, à partir d'une différence entre l'air disponible mesuré moins l'air de combustion régulé et
- l'air parasite apparaissant étant affiché dans le cadre d'une indication d'air parasite,

le dispositif de régulation comprenant en outre

- un module d'indication d'air parasite, au moyen duquel il est affiché

si un air parasite, dans un premier cas, apparaît en amont dans ou avant le régénérateur gauche et/ou droit du côté de l'air ou si un air parasite apparaît, dans un deuxième cas, en aval après le régénérateur gauche ou droit du côté de l'air dans la chambre du four et
- un module de bifurcation qui est conçu pour faire en sorte que

dans une première partie d'une boucle de régulation, pour le premier cas, une introduction d'air de combustion dans la chambre du four est réglée en tant que grandeur de réglage selon la sortie d'un régulateur λ, au moyen d'un premier organe de réglage et

dans une deuxième partie de la boucle de régulation, pour le deuxième cas, une pression de four dans la chambre du four est réglée en tant que grandeur de réglage selon la sortie du régulateur λ, au moyen d'un deuxième organe de réglage.

18. Dispositif de régulation selon la revendication 17, comprenant en outre :

un module de régulation de température pour une première boucle de régulation , au moyen duquel :

- par l'intermédiaire d'une température de chambre du four en tant que grandeur de régulation et
- par l'intermédiaire d'un premier régulateur pour la température de chambre du four ainsi que
- par l'intermédiaire d'un organe de réglage correspondant au premier régulateur, une première grandeur de réglage réglable est réglée sous la forme d'un débit de carburant et/ou d'un débit d'air de combustion et

un module de régulation symétrique correspondant aux régénérateurs gauche et droit, pour une deuxième boucle de régulation, au moyen duquel :

- par l'intermédiaire d'une première grandeur caractéristique de préchauffage significative pour l'enthalpie de l'air de combustion du premier régénérateur et d'une deuxième grandeur caractéristique de préchauffage significative pour l'enthalpie de l'air de combustion du deuxième régénérateur et
- par l'intermédiaire d'un deuxième régulateur pour la différence entre les première et deuxième grandeurs caractéristiques de préchauffage ainsi que
- par l'intermédiaire d'un organe de réglage correspondant au deuxième régulateur, une deuxième grandeur de réglage réglable est réglée sous la forme d'une grandeur de transmission de chaleur influençant la transmission de chaleur entre les premier et deuxième régénérateurs.

19. Four industriel chauffé de manière régénérative, avec une chambre de four, plus particulièrement, avec un bac de fusion, plus particulièrement pour le verre, comprenant en outre :

- au moins un injecteur de carburant pour l'injection de carburant dans la chambre du four, qui est conçu pour l'injection de carburant, plus particulièrement pratiquement sans air de combustion,
- un régénérateur gauche et un régénérateur droit correspondant à l'au moins un injecteur de carburant, qui sont conçus pour l'accumulation régénérative de chaleur provenant du gaz d'échappement et pour la transmission de chaleur vers l'air de combustion, pour le guidage périodiquement alterné d'une part d'air de combustion vers la chambre du four lors d'une première période et d'autre part de gaz d'échappement hors de la chambre du four lors d'une deuxième période séparément du carburant et
- un dispositif de régulation selon la revendication 17 ou 18.

FIG. 1

ZIRKONDIOXID-SAUERSTOFF-
SONDE MIT HITZESCHUTZ-
TRICHTER UND MESSBLOCK

LUFTZUTRITT
IN OFEN
Ⓔ

NICHT AN VERBRENNUNG
TEILNEHMENDER LUFT-
ZUTRITT IN OFEN
Ⓕ

ZIRKONDIOXID-SAUERSTOFF-
SONDE MIT HITZESCHUTZ-
TRICHTER UND MESSBLOCK

BRENNSTOFF

GLAS

VB

LUFT-FALSCH
MESSUNG

GENERELLE
EINSTELLUNG

BRENN-
LUFT

LUFTZUTRITT IN
REGENERATOR Ⓐ

LUFTZUTRITT IN
REGENERATOR Ⓓ

LUFTVERLUST Ⓒ

SCHIEBER

ABGAS

EP 2 619 150 B1

FIG. 2

EP 2 619 150 B1

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3610365 A1

**In der Beschreibung aufgeführte Nicht-Patentliteratur**

- **HEMMANN et al.** Advanced combustion control - the basis for a NOx reduction and energy saving in glass tank furnaces. *Glass Science Technology,* 2004, vol. 77 (6